# EUROPEAN PATENT APPLICATION

(11) **EP 3 828 762 A1**
(43) Date of publication of application: **02.06.2021**
(21) Application number: 20210019.4
(22) Date of filing: 26.11.2020
(51) Int. Cl.: G06K 9/00, G06K 9/62

(54) **CELL ANALYSIS METHOD, CELL ANALYSIS DEVICE, CELL ANALYSIS SYSTEM, CELL ANALYSIS PROGRAM, AND TRAINED ARTIFICIAL INTELLIGENCE ALGORITHM GENERATION METHOD**

(30) Priority: 29.11.2019 JP 2019217159
(71) Applicant: Sysmex Corporation, Kobe-shi, Hyogo 651-0073 (JP)
(72) Inventor: Shirai, Kentaro, Kobe-shi, Hyogo 651-0073 (JP); Katsumata, Eri, Kobe-shi, Hyogo 651-0073 (JP); Okamoto, Yuji, Kobe-shi, Hyogo 651-0073 (JP); Imakubo, Momoko, Kobe-shi, Hyogo 651-0073 (JP); Lu, Jianyin, Kobe-shi, Hyogo 651-0073 (JP)
(74) Representative: Hoffmann Eitle

(57) **Abstract**

To provide a cell analysis method, a cell analysis device, a cell analysis system, a cell analysis program, and a trained artificial intelligence algorithm generation method, generation device, and generation program to facilitate high-accuracy and high-speed analysis of more cells in a sample.

SOLUTION:

The problem is resolved by a cell analysis method for analyzing cells using an artificial intelligence algorithm, in which a sample containing cells is caused to flow in a flow path, an analysis target image is generated by imaging cells passing through the flow path, analysis data are generated from the generated analysis target image, the generated analysis data are input to the artificial intelligence algorithm, and data indicating the properties of the cells contained in the analysis target image are generated by the artificial intelligence algorithm.

## Description

### CROSS REFERENCE TO RELATED APPLICATIONS

This application claims priority from prior Japanese Patent Application(s) No. 2019-217159, filed on November/29/2019, entitled "CELL ANALYSIS METHOD, CELL ANALYSIS DEVICE, CELL ANALYSIS SYSTEM, AND CELL ANALYSIS PROGRAM, AND TRAINED ARTIFICIAL INTELLIGENCE ALGORITHM GENERATION METHOD, GENERATION DEVICE, AND GENERATION PROGRAM", the entire contents of which are incorporated herein by reference.

### FIELD OF THE INVENTION

The present invention relates to a cell analysis method, cell analysis device, cell analysis system, and cell analysis program, and trained artificial intelligence algorithm generation method, generation device, and generation program.

### BACKGROUND

WIPO Patent Publication No. 2015/065697 discloses a method of applying a filtered microscope image to a trained machine learning model to determine centers and boundaries of cells of a specific type, count the determined cells, and output an image of the cells.

### SUMMARY OF THE INVENTION

In examinations of patients who may have a tumor, it is necessary to understand the presence of abnormal cells such as peripheral circulating tumor cells and the proportion of cells having chromosome abnormality in a sample containing multiple types of cells to determine the presence or absence of a tumor, the effect of anticancer therapy, the presence or absence of recurrence and the like.

A number of abnormal cells contained in a sample may be very small compared with the number of normal cells that should originally be present in the sample. Therefore, it is necessary to analyze more cells in order to detect abnormal cells contained in the sample. However, since the method described in WIPO Patent Publication No. 2015/065697 uses a microscope image, increasing the number of cells to be determined increases the time required to acquire the microscope image.

The present invention provides a cell analysis method, a cell analysis device, a cell analysis system, a cell analysis program, and a trained artificial intelligence algorithm generation method, generation device, and generation program to facilitate high-accuracy and high-speed analysis of more cells in the sample.

One embodiment of the present invention relates to a cell analysis method for analyzing cells using an artificial intelligence algorithm (60, 63, 97). The cell analysis method causes a sample (10) containing cells to flow through a flow channel (111), images cells passing through the flow channel (111) to generate analysis target images (80, 85, 95), generates analysis data (82, 87, 96) from the generated analysis target images (80, 85, 95), inputs the generated analysis data to the artificial intelligence algorithm (60, 63, 97), and generates data (84, 88, 98) indicating the properties of the cells contained in the analysis target images (80, 85, 95) by the artificial intelligence algorithm.

One embodiment of the present invention relates to a cell analysis device (400A, 200B, 200C) that analyzes cells using an artificial intelligence algorithm (60, 63, 97). The cell analysis device (400A, 200B, 200C) includes a control unit (40A, 20B, 20C) configured to cause a sample (10) containing cells to flow in a path (111), inputs analysis data (82, 87, 96) generated from analysis target images (80, 85, 95) of cells passing through the flow path (111) into an artificial intelligence algorithm (60, 63, 97), and generates data 84, 88, 98) indicating the properties of the cell contained in the analysis target images (80, 85, 95) by the artificial intelligence algorithm 60, 63, 97).

One embodiment of the present invention relates to a cell analysis system (1000, 2000, 3000). Cell analysis system (1000, 2000, 3000) includes a flow cell (110) through which a sample (10) containing cells flows, light sources (120, 121, 122, 123) for irradiating light on the sample (10) flowing in the flow cell (110), an imaging unit (160) for imaging the cells in the sample (10) irradiated with the light, and a control unit (40A, 20B, 20C). The control unit (40A, 20B, 20C) is configured to acquire, as the analysis target images (80, 85, 95), images of the cells passing through the inside of the flow path (111) captured by the imaging unit (160), generate analysis target data (82, 87, 96) from the analysis target images (80 80,85,95), input the analysis data (82,87,96) to the artificial intelligence algorithm (60,63,97), and generate data (84, 88, 98) indicating the properties of cells included in the analysis target images (80, 85, 95).

One embodiment of the present invention relates to a cell analysis program for analyzing cells. The cell analysis program executes processing including a step (S22) of flowing a sample (10) containing cells into a flow path (111) and inputting analysis data (82, 87, 96) generated from analysis target images (80, 85, 95) obtained by imaging cells passing through the flow path (111) into an artificial intelligence algorithm (60, 63, 97), and a step (S23) of generating data (84, 88, 98) indicating the properties of cells included in the analysis target images (80, 85, 95) by the artificial intelligence algorithm (60, 63, 97).

The cell analysis device (400A, 200B, 200C), cell analysis system (1000, 2000, 3000), and cell analysis program facilitate high-accuracy and high-speed analysis of more cells contained in a sample.

One embodiment of the invention relates to a trained artificial intelligence algorithm (60, 63, 97) generation method for analyzing cells. The generation method includes inputting training data (73, 78, 92) generated from training images (70, 75, 90) which capture a cell passing through a flow path (111) when flowing a sample (10) containing cells in the flow path (111), and inputting a label (74P, 74N, 79P, 79N, 93P, 93N) showing the properties of cells contained in the training image (70, 75, 90) into an artificial intelligence algorithm (50, 53, 94) to train the artificial intelligence algorithm (50, 53, 94).

One embodiment of the present invention relates to a trained artificial intelligence algorithm (60, 63, 97) generation device (200A, 200B, 200C) for analyzing cells. The generation device (200A, 200B, 200C) is provided with a control unit (20A, 20B, 20C) configured to input training data (73, 78, 92) generated from training image (70, 75, 90) of a cell passing through a flow path (111) when flowing a sample (10) containing cells in the flow path (111), and input a label (74P, 74N, 79P, 79N, 93P, 93N) indicating a property of a cell included in the training image (70, 75, 90) to an artificial intelligence algorithm (50, 53, 94) to train the artificial intelligence algorithm (50, 53, 94).

One embodiment of the present invention relates to a trained artificial intelligence algorithm (60, 63, 97) generation program for analyzing cells. The generation program executes processing including a step (S12) of inputting training data (73, 78, 92) generated from training images (70, 75, 90) of a cell passing through a flow path (111) when flowing a sample (10) containing cells in the flow path (111) and inputting a label (74P, 74N, 79P, 79N, 93P, 93N) indicating the properties of cells contained in the training image (70, 75, 90) into the artificial intelligence algorithm (50, 53, 94), and a step (S12) of training the artificial intelligence algorithm (50, 53, 94).

An artificial intelligence algorithm (60, 63, 97) can be generated to facilitate high-speed high-accuracy analysis of cells contained in a sample by a trained artificial intelligence algorithm (60, 63, 97) generation method, generation device (200A, 200B, 200C), and generation program.

It is possible to facilitate high-accuracy and high-speed analysis of more cells contained in a sample.

### BRIEF DESCRIPTION OF THE DRAWINGS

FIG. 1 shows a method for generating training data for training a first artificial intelligence algorithm 50 for analyzing chromosomal abnormalities; FIG. 1A shows a method for generating positive training data; FIG. 1B shows a method for generating negative training data;
FIG. 2 shows a method of generating training data for training a first artificial intelligence algorithm 50 for analyzing chromosomal abnormalities;
FIG. 3 shows a method of generating analysis data for analyzing a chromosomal abnormality and a method of analyzing cells by a trained first artificial intelligence algorithm 60;
FIG. 4 shows a staining pattern of PML-RARA chimera gene-positive cells by an imaging flow cytometer; The left of FIG. 4A shows an image of channel 2, and the right shows an image of channel 2; FIG. 4B is a cell different from FIG. 4A, and the left shows an image of channel 2 and the right shows an image of channel 2;
FIG. 5 shows an example of a fluorescent label pattern;
FIG. 6 shows an example of a fluorescent label pattern;
FIG. 7 shows an example of a fluorescent label pattern;
FIG. 8 shows a method of generating training data for training a first artificial intelligence algorithm 53 for analyzing peripheral circulating tumor cells;
FIG. 9 shows a method of generating training data for training the first artificial intelligence algorithm 53 for analyzing peripheral circulating tumor cells; FIG. 9A shows a method for generating positive training data; FIG. 9B shows a method for generating negative training data;
FIG. 10 shows a method of generating training data for training the first artificial intelligence algorithm 53 for analyzing peripheral circulating tumor cells;
FIG. 11 shows a method of generating analysis data for analyzing peripheral circulating tumor cells and a method of analyzing cells by the trained first artificial intelligence algorithm 63;
FIG. 12A shows a training data generation method for training a second artificial intelligence algorithm 94 for analyzing peripheral circulating tumor cells; FIG. 12B shows a method of generating analysis data and a method of analyzing cells by the second artificial intelligence algorithm 97;
FIG. 13 shows a feature quantity for training the second artificial intelligence algorithm 94;
FIG. 14 shows a definition of a feature quantity for training the second artificial intelligence algorithm 94; FIG. 14A shows Height and Width; FIG. 14B shows Major Axis and Minor Axis; FIG. 14C shows Length, Thickness Max, and Thickness Min. FIG. 14D shows Aspect Ratio, Elongatedness, and Shape Ratio; FIG. 14E shows a Lobe Symmetry pattern;
FIG. 15 shows a hardware structure of the cell analysis system 1000;
FIG. 16 shows a hardware structure of training devices 200A, 200B, and 200C;
FIG. 17 shows function blocks of the training device 200A;
FIG. 18A shows a flowchart of a training process of the first artificial intelligence algorithm; FIG. 18B shows a flowchart of the training process of a second artificial intelligence algorithm;
FIG. 19 shows a hardware structure of a cell imaging device 100A and a cell analysis device 400A;
FIG. 20 shows function blocks of the cell analysis device 400A;
FIG. 21 shows a flowchart of cell analysis processing;
FIG. 22 shows a hardware structure of the cell analysis system 2000;
FIG. 23 shows function blocks of the training/analysis device 200B;
FIG. 24 shows a hardware structure of a cell analysis system 3000;
FIG. 25 shows function blocks of training 200C;
FIG. 26A shows a data set for examining an artificial intelligence algorithm (CNN) for analyzing peripheral circulating tumor cells; FIG. 26B shows the correct answer rate of the trained artificial intelligence algorithm; FIG. 26C shows an example of a correct answer image;
FIG. 27 shows a data set for examining artificial intelligence algorithms (random forest, gradient boosting) for analyzing peripheral circulating tumor cells;
FIG. 28A shows a CNN loss function for analyzing chromosomal abnormalities; FIG. 28B shows the correct answer rate of CNN for analyzing chromosomal abnormalities;
FIG. 29A shows the inference result of sample number 04-785; FIG. 29B shows the inference result of sample number 03-352; and FIG. 29C shows the inference result of sample number 11-563.

### DESCRIPTION OF THE EMBODIMENTS OF THE INVENTION

Hereinafter, the summary and embodiments of the present invention will be described in detail with reference to the accompanying drawings. Note that in the following description and drawings, the same reference numeral denotes the same or similar component, and thus the description of the same or similar component may be omitted.

### I. Cell Analysis Method

### 1. Summary of Cell Analysis Method

The present embodiment relates to a cell analysis method for analyzing cells using an artificial intelligence algorithm. In the cell analysis method, an analysis target image obtained by capturing an image of an analysis target cell is acquired by causing a sample containing cells to flow in a flow path and imaging the cells passing through the flowpath. The analysis data to be input to the artificial intelligence algorithm are generated from the acquired analysis target image. When the analysis data are input to the artificial intelligence algorithm, the artificial intelligence algorithm generates data indicating the properties of the cells included in the analysis target image. The analysis target image is preferably an image of individual cells passing through the flow path.

In the present embodiment, the sample may be a sample prepared from a specimen collected from a subject. The sample may include, for example, blood samples such as peripheral blood, venous blood, arterial blood, urine samples, and body fluid samples other than blood and urine. Body fluids other than blood and urine may include bone marrow, ascites, pleural effusion, spinal fluid and the like. Body fluids other than blood and urine may be simply referred to as "body fluid". The blood is preferably peripheral blood. For example, the blood may be peripheral blood collected by using an anticoagulant such as ethylenediaminetetraacetate sodium salt or potassium salt) and heparin sodium.

The sample can be prepared from the specimen according to a known method. For example, an examiner collects nucleated cells by subjecting a blood sample collected from a subject to centrifugation or the like using a cell separation medium such as Ficoll. In recovering the nucleated cells, the nucleated cells may be left by hemolyzing red blood cells and the like using a hemolytic agent instead of recovering the nucleated cells by centrifugation. The target site of the recovered nucleated cells is labeled with at least one selected from the Fluorescence In Situ Hybridization (FISH) method, immunostaining method, intracellular organelle staining method and the like described below, and preferably by performing fluorescent labeling; then the suspension liquid of the labeled cells is used as a sample supplied to, for example, in an imaging flow cytometer to image the analysis target cells.

The sample can include multiple cells. Although the number of cells contained in the sample is not particularly limited, the sample should contain at least 10² or more, desirably 10³ or more, preferably 10⁴ or more, more preferably 10⁵ or more, and ideally 10⁶ or more cells. Also, the plurality of cells may include different types of cells.

In the present embodiment, cells that can be analyzed are also referred to as analysis target cells. The analysis target cell may be a cell contained in a sample collected from a subject. Preferably, the cells may be nucleated cells. The cells can include normal cells and abnormal cells.

Normal cell means a cell that should be originally contained in the sample depending on the body part where the sample is collected. Abnormal cell mean cells other than normal cells. Abnormal cells can include cells with chromosomal abnormalities and/or tumor cells. Here, the tumor cells are preferably peripheral circulating tumor cells. More preferably, the peripheral circulating tumor cells are not intended to be hematopoietic tumor cells in which tumor cells are present in the blood in a normal pathological state, rather tumor cells originating from a cell lineage other than a hematopoietic cell line are intended to be in circulation. In the present specification, tumor cells circulating peripherally are also referred to as circulating tumor cells (CTC).

When detecting a chromosomal abnormality, the target site is the nucleus of the cell to be analyzed. Examples of chromosomal abnormalities include chromosomal translocations, deletions, inversions, duplications, and the like. Examples of cells having such chromosomal abnormalities include myelodysplastic syndrome, acute myeloblastic leukemia, acute myeloblastic leukemia, acute promyelocytic leukemia, acute myelomonocytic leukemia, and acute monocytic leukemia, erythroleukemia, acute megakaryoblastic leukemia, acute myelogenous leukemia, acute lymphocytic leukemia, lymphoblastic leukemia, chronic myelogenous leukemia, chronic leukemia such as leukemia, Hodgkin lymphoma, non-Hodgkin lymphoma, malignant lymphoma and multiple myeloma.

The chromosomal abnormality can be detected by a known method such as the FISH method. In general, test items for detecting chromosomal abnormalities are set according to the type of abnormal cells to be detected. The gene or locus to be analyzed is set as an analysis item depending on what kind of test item is to be performed on the sample. In the detection of chromosomal abnormalities by the FISH method, abnormal chromosome position or abnormal number can be detected by hybridizing a probe that specifically binds to the locus or gene present in the nucleus of the cell to be analyzed. The probe is labeled with a labeling substance. The labeling substance is preferably a fluorescent dye. Depending on the probe, when the labeling substance is a fluorescent dye, the labeling substance combines with fluorescent dyes having different fluorescence wavelength regions, and it is possible to detect multiple genes or loci in one cell.

The abnormal cell is a cell that appears when suffering from a predetermined disease, and may include, for example, a tumor cell such as a cancer cell or a leukemia cell. In the case of hematopoietic organs, the predetermined diseases can be selected from a group consisting of myeloid dysplasia syndrome, acute myeloid leukemia, acute myeloid leukemia, acute premyelocytic leukemia, acute myeloid monocytic leukemia, acute monocytic leukemia, leukemia such as red leukemia, acute meganuclear blast leukemia, acute myeloid leukemia, acute lymphocytic leukemia, lymphoblastic leukemia, chronic myeloid leukemia, or chronic lymphocytic leukemia, Hodgkin lymphoma, non-Hodgkin lymphoma, malignant lymphoma and multiple myeloid leukemia. In the case of organs other than hematopoietic organs, the predetermined diseases may be gastrointestinal malignant tumors originating from the rectum or anal region, upper pharynx, esophagus, stomach, duodenum, jejunum, ileum, cecum, worm, ascending colon, transverse colon, descending colon, S-shaped colon; liver cancer; cholangiocarcinoma; cholangiocarcinoma; pancreatic cancer; pancreatic cancer; urinary malignancies originating from the bladder, ureter or kidney; female reproductive system malignancies originating from the ovaries, Fallopian tubes, uterus; breast cancer; pre-stage cancer; skin cancer; endocrine malignancies such as the hypothalamus, pituitary gland, thyroid gland, parathyroid gland, adrenal gland, and pancreas; central nervous system malignancies; and solid tumors such as a malignant tumor that develops from bone and soft tissue.

Abnormal cells can be detected using at least one selected from bright-field images, immunostaining images for various antigens, and organelle-stained images that specifically stain organelles.

A bright-field image can be obtained by irradiating a cell with light and imaging the transmitted light from the cell or the reflected light from the cell. Preferably, the bright-field image is an image obtained by capturing the phase difference of cells using transmitted light.

Immunostained images can be obtained by imaging immunostained cells by labeling with a labeling substance using an antibody capable of binding to an antigen present at at least one intracellular or cell target site selected from the nucleus, cytoplasm, and cell surface. As the labeling substance, it is preferable to use a fluorescent dye as in the FISH method. Depending on the antigen, when the labeling substance is a fluorescent dye, the labeling substance combines with fluorescent dyes having different fluorescence wavelength regions, and it is possible to detect multiple antigens in one cell.

Organelle-stained images can be obtained by imaging stained cells using dyes that can selectively bind to proteins, sugar chains, lipids, nucleic acids and the like present in at least one cell or cell membrane target site selected from the nucleus, cytoplasm, and cell membrane. Examples of nuclear-specific stains include Hoechst (TM) 33342, Hoechst (TM) 33258, 4', 6-diamidino-2-phenylindole (DAPI), Propidium Iodide (PI), DNA-binding dyes such as ReadyProbes (TM) nuclear staining reagents, and Histone protein binding reagents such as Cell Light (TM) reagent. Examples of the nucleolus and RNA-specific staining reagent include SYTO (TM) RNA Select (TM), which specifically binds to RNA. Examples of the cytoskeleton-specific staining reagent include fluorescently labeled phalloidin. The CytoPainter series from Abcam plc (Cambridge, UK) can be used as dye to stain other organelles, such as lysosomes, endoplasmic reticulum, Golgi apparatus, mitochondria and the like. These staining dyes or staining reagents are fluorescent dyes or reagents containing fluorescent dyes, and different fluorescence wavelength regions can be selected depending on the wavelength range of the fluorescence of the organelles and the fluorescent dyes used as another stain applied jointly to one cell.

When detecting abnormal cells, inspection items are set according to what kind of abnormal cells are detected. The inspection items may include analysis items necessary for detecting abnormal cells. The analysis items may be set corresponding to the above-mentioned bright-field image, each antigen, and each organelle. Fluorescent dyes having different wavelength regions of fluorescence correspond to each analysis item except for the bright field, and different analysis items can be detected in one cell.

The analysis data to be input to the artificial intelligence algorithm is acquired by a method described later. The data indicating the properties of the cells included in the analysis target image generated by the artificial intelligence algorithm are, for example, data indicating whether the analysis target cells are normal or abnormal. More specifically, the data indicating the properties of the cells included in the analysis target image are data indicating whether the analysis target cell is a cell having a chromosomal abnormality or a peripheral circulating tumor cell.

For convenience of description in the present specification, "analysis target image" may be referred to as "analysis image", "data to be analyzed" may be referred to as "analysis data", "image for training" may be referred to as "training image", and "data for training" may be referred to as "training data". The "fluorescent image" is intended to be a training image obtained by imaging a fluorescent label or an analysis image obtained by imaging a fluorescent label.

### 2. Cell Analysis Method Using a First Artificial Intelligence Algorithm

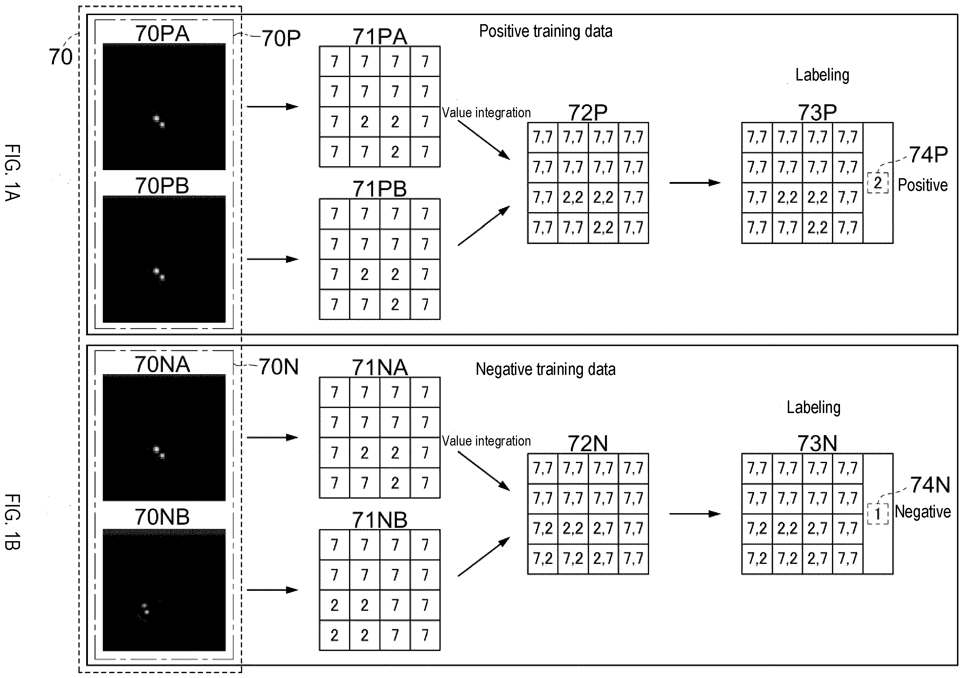

The training method of the first artificial intelligence algorithms 50 and 53 and the cell analysis method using the trained first artificial intelligence algorithms 60 and 63 will be described with reference to FIGS. 1 to 11. The first artificial intelligence algorithms 60 and 63 can be deep learning algorithms having a neural network structure. The neural network structure can be selected from a fully connected deep neural network (FC-DNN), a convolutional neural network (CNN), an autoregressive neural network (RNN), and a combination thereof. A convolutional neural network is preferred.

As the artificial intelligence algorithm, for example, the artificial intelligence algorithm provided by Python can be used.

### 2-1. Artificial Intelligence Algorithm for Detecting Chromosomal Abnormality

This embodiment is related to a method for training a first artificial intelligence algorithm 60 for detecting a chromosomal abnormality, and a cell analysis method using the first artificial intelligence algorithm 60 for detecting a chromosomal abnormality. Here, the term "train" or "training" may be used in place of the term "generate" or "generating".

### (1) Training Data Generation

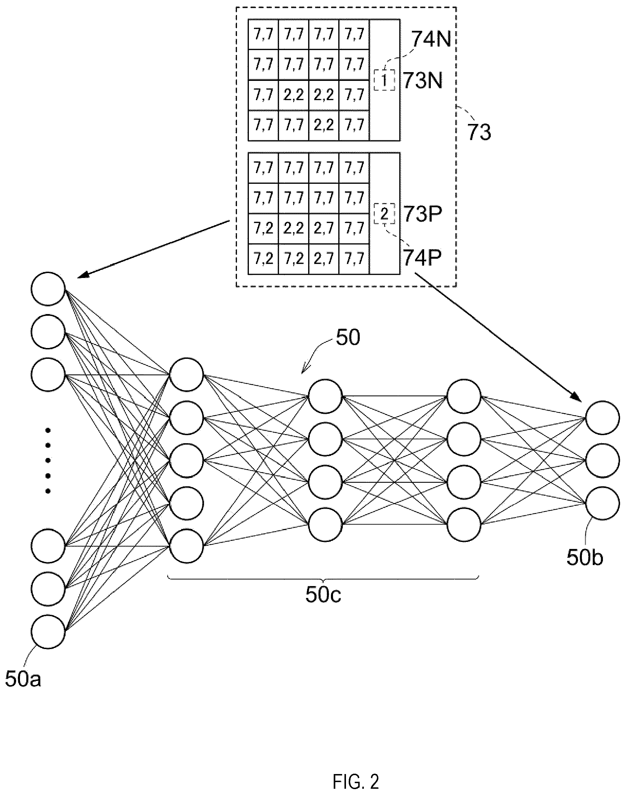

A training method of the first artificial intelligence algorithm 50 for detecting a chromosomal abnormality will be described with reference to FIGS. 1 and 2. In FIG. 1, an example using an image of FISH staining of the PML-RARA chimeric gene formed by translocation of a transcriptional regulator lodged on the long arm of chromosome 15 (15q24.1), and the retinoic acid receptor α (RARA) gene located on the long arm of chromosome 17 (17q21.2).

As shown in FIG. 1, positive training data 73P and negative training data 73N are generated from a positive training image 70P obtained by imaging a cell positive for a chromosomal abnormality (hereinafter referred to as "first positive control cell") and a negative training image 70N obtained by imaging a cell negative for chromosomal abnormality (hereinafter referred to as "first positive control cell"), respectively. The positive training image 70P and the negative training image 70N may be collectively referred to as a training images 70. Further, the positive training data 73P and the negative training data 73N may be collectively referred to as training data 73.

Here, the case of detecting the PML-RARA chimeric gene will be exemplified. The example shows a probe for detecting the PML locus is bound to a first fluorescent dye that fluoresces in the green wavelength region, and a probe for detecting the RARA locus is bound to a second fluorescent dye that fluoresces in the red wavelength region different from that of the first fluorescent dye. The nucleus of the first positive control cell and the nucleus of the first negative control cell can be labeled with the first fluorescent dye and the second fluorescent dye, respectively, by the FISH method using the probe bound with the first fluorescent dye and the probe bound with the second fluorescent dye. The label with the first fluorescent dye at the target site may be referred to as the first fluorescent label, and the label with the second fluorescent dye at the target site may be referred to as the second fluorescent label.

A sample containing cells having the first fluorescent label and the second fluorescent label can be subjected to analysis in a cell imaging device such as an imaging flow cytometer to capture an image of the cells. An image taken of a cell may include multiple images for the same field of view of the same cell. Since the first fluorescent label and the second fluorescent label have different fluorescence wavelength regions of the respective fluorescent dyes, a first filter for transmitting light emitted from the first fluorescent dye and a second filter for transmitting the light emitted from the second fluorescent dye differ. Therefore, the light transmitted through the first filter and the light transmitted through the second filter are taken into the imaging unit 160 described later via a corresponding first channel and a second channel, respectively, to capture as separate images of the same cell in the same field of view. That is, in the imaging unit 160, a plurality of images corresponding to the number of labeling substances labeling the cell are acquired for the same field of view of the same cell.

Therefore, in the example of FIG. 1, as shown in FIG. 1A, the positive training image 70P includes a first positive training image 70PA in which a green first fluorescent label is imaged via a first channel and a second positive training image 70PB in which a red second fluorescent label is imaged via a second channel for the first positive control cell. The first positive training image 70PA and the second positive training image 70PB are associated with each other as images of the same field of view of the same cell. The first positive training image 70PA and the second positive training image 70PB are then converted to the first positive numerical training data 71PA and the second positive numerical training data 71PB, which numerically indicate the brightness of the captured light at each pixel in the image.

A method of generating the first positive numerical training data 71PA will be described using the first positive training image 70PA. In order to extract the cell region, each image captured by the imaging unit 160 is trimmed, for example, to a predetermined number of pixels, for example, 100 pixels in the vertical direction and 100 pixels in the horizontal direction, to generate a training image 70. At this time, trimming is performed so that the images acquired from each channel for one cell have the same field of view. It can be exemplified that the trimming process determines the center of gravity of the cell and cuts out a region within a range of a predetermined number of pixels centered on the center of gravity. In the image of the cells flowing through the flow cell, the position of the cells in the image may differ between the images, but by trimming, more accurate training becomes possible. The first positive training image 70PA is represented, for example, as a 16-bit grayscale image. Therefore, in each pixel, the brightness of the pixel can be indicated by a numerical value of the brightness of 65,536 gradations from 1 to 65,536. As shown in FIG. 1A, the value indicating the gradation of brightness in each pixel of the first positive training image 70PA is the first positive numerical training data 71PA, which expresses a matrix of numbers corresponding to each pixel.

Similar to the first positive numerical training data 71PA, the second positive numerical training data 71PB indicating the brightness of the imaged light at each pixel in the image can be generated from the second positive training image 70PB.

Next, the first positive numerical training data 71PA and the second positive numerical training data 71PB are integrated for each pixel to generate positive integrated training data 72P. As shown in FIG. 1A, the positive integrated training data 72P are matrix data in which the numerical value in each pixel of the first positive numerical training data 71PA is shown side by side with the value in each pixel of the second positive numerical training data 71PB.

Next, the positive integrated training data 72P are labeled with a label value 74P indicating that the positive integrated training data 72P are derived from the first positive control cell, and the labeled positive integrated training data 73P are generated. The numeral "2" is attached in FIG. 1A as a label indicating that it is the first positive control cell.

From the negative training image 70N, the labeled negative integrated training data 73N are generated in the same manner as in the case of generating the labeled positive integrated training data 73P.

As shown in FIG. 1B, the negative training image 70N includes a first negative training image 70NA obtained by imaging a green first fluorescent label through a first channel and a second negative training image 70NB obtained by imaging a blue second fluorescent label through a second channel with regard to a first negative control cell. Imaging and trimming, and quantification of the brightness of light in each pixel are the same as in the case of acquiring the first positive numerical training data 71PA from the first positive training image 70PA. It is possible to generate the first negative numerical training data 71NA which numerically indicates the brightness of the captured light in each pixel in the image from the first negative training image 70N by the same method as the first positive numerical training data 71PA.

Similarly, from the second negative training image 70NB, it is possible to generate the second negative numerical training data 71NB that numerically indicates the brightness of the captured light at each pixel in the image.

As shown in FIG. 1B, the first negative numerical training data 71NA and the second negative numerical training data 71NB are integrated for each pixel according to the method of generating the positive integrated training data 72P, and the negative integrated training data 72N are generated. As shown in FIG. 1B, the negative integrated training data 72N become matrix data in which the numerical value in each pixel of the first negative numerical training data 71NA is shown side by side with the value in each pixel of the second negative numerical training data 71NB.

Next, the negative integrated training data 72N is labeled with a label value 74N indicating that the negative integrated training data 72N is derived from the first negative control cell, and labeled negative integrated training data 73N are generated. A "1" is attached in FIG. 1B as a label indicating that it is the first negative control cell.

FIG. 2 shows a method of inputting the labeled positive integrated training data 73P and the labeled negative integrated training data 73N generated in the first artificial intelligence algorithm 50. The number of nodes in the input layer 50a in the first artificial intelligence algorithm 50 having a neural network structure corresponds to the product of the number of pixels of the training image 70 (100 × 100 = 10,000 in the above example) and the number of channels for one cell (two channels of a green channel and a red channel in the above example). Data corresponding to the positive integrated training data 72P of the labeled positive integrated training data 73P are input to the input layer 50a of the neural network. A label value 74P corresponding to the data input to the input layer 50a is input to the output layer 50b of the neural network. Further, data corresponding to the negative integrated training data 72N of the labeled negative integrated training data 73N are input to the input layer 50a of the neural network. A label value 74N corresponding to the data input to the input layer 50a is input to the output layer 50b of the neural network. With these inputs, each weight in the intermediate layer 50c of the neural network is calculated, the first artificial intelligence algorithm 50 is trained, and the trained first artificial intelligence algorithm 60 is generated.

### (2) Analysis Data Generation and Cell Analysis

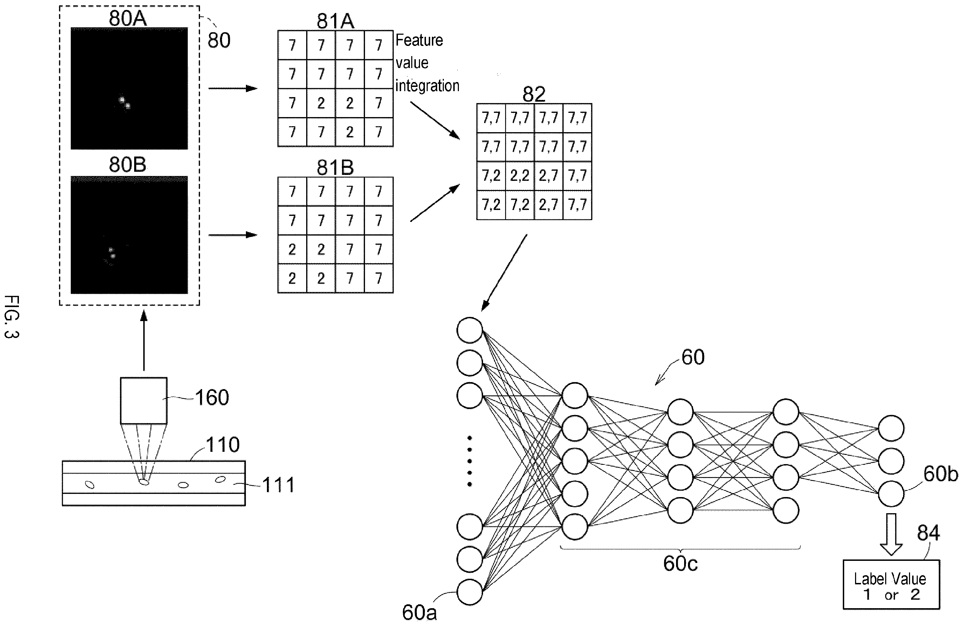

A cell analysis method in which cells flowing through a flow cell 110 are imaged, integrated analysis data 82 are generated from the generated analysis image 80, and a trained first artificial intelligence algorithm 60 is used will be described with reference to FIG. 3. The analysis image 80 can be imaged in the same manner as the method in which the training image 70 is imaged.

As shown in FIG. 3, the cells flowing through the flow cell 110 are imaged by the imaging unit 160 to generate an analysis image 80. By imaging the cells flowing through the flow cell 110, a large number of analysis images 80 can be generated in a short time, and a large number of cells can be analyzed in a short time. Although the number of abnormal cells contained in a sample may be very small compared to the number of normal cells that should originally exist in the sample, according to the current analysis method, which enables analysis of a large number of cells in a short time, It is possible to suppress overlooking abnormal cells. The analysis image 80 includes a first analysis image 80A in which a green first fluorescent label is imaged via a first channel and a second analysis image 80B in which a red second fluorescent label is imaged via a second channel for the cells to be analyzed. Imaging and trimming, and quantification of the brightness of light in each pixel are the same as in the case of acquiring the first positive numerical training data 71PA from the first positive fluorescent label image 70PA. As described above, in the image of the cells flowing through the flow cell, the positions of the cells in the image may differ between the images, but by trimming, more accurate analysis becomes possible. Using the same method as the first positive numerical training data 71PA, the first numerical analysis data 81A which numerically indicate the brightness of the captured light at each pixel in the image can be generated from the first analysis image 80A.

Similarly, from the second analysis image 80B, it is possible to generate the second numerical analysis data 81B which numerically indicates the brightness of the captured light in each pixel in the image.

As shown in FIG. 3, the first numerical analysis data 81A and the second numerical analysis data 81B are integrated for each pixel to generate the integrated analysis data 82 according to the method of generating the positive integrated training data 72P. As shown in FIG. 3, the integrated analysis data 82 become matrix data in which the numerical value in each pixel of the first numerical analysis data 81A is shown side by side with the value in each corresponding pixel of the second numerical analysis data 81B.

As shown in FIG. 3, the generated integrated analysis data 82 are input to the input layer 60a of the neural network in the trained first artificial intelligence algorithm 60. The value included in the input integrated analysis data 82 outputs a label value 84 indicating whether the analysis target cell has a chromosomal abnormality from the output layer 60b of the neural network via the intermediate layer 60c of the neural network. In the example shown in FIG. 3, when it is determined that the cell to be analyzed does not have a chromosomal abnormality, "1" is output as a label value, and when it is determined that the cell has a chromosomal abnormality, "2" is output as a label value. Instead of the label value, labels such as "none", "yes", "normal", and "abnormal" also may be output.

### (3) Other Configurations

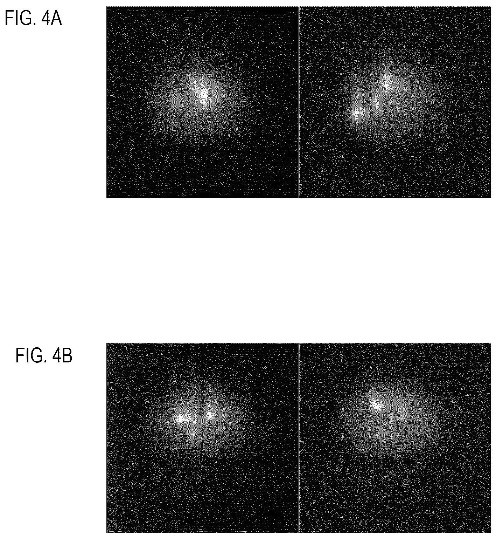

i. In the present embodiment, the imaging flow cytometer uses an Extended Depth of Field (EDF) filter for expanding the depth of field when imaging cells, such that the cell image provided to the examiner restores the focal depth of the image after imaging. However, the training image 70 and the analysis image 80 used in the present embodiment are preferably images that have not been restored with respect to the images captured by using the EDF filter. An example of an image that has not been restored i shown in FIG. 4. FIG. 4 shows cells positive for the PML-RARA chimeric gene. A and B are images of different cells. The images on the left side of FIGS. 4A and 4B show images of the first fluorescent label. The images on the right side of FIGS. 4A and 4B show images of the same cells as the cells on the left side, and the image of the second fluorescent label imaged in the same field of view as the image on the left side.
ii. Out-of-focus images can be excluded from the training image 70 and the analysis image 80 during imaging. Whether the image is in focus can be determined because if the difference in brightness between each pixel and the adjacent pixel does not include a part where the gradient of the difference changes drastically in the entire image, it can be determined that the image is out of focus.
iii. The training image 70 and the analysis image 80 used in the present embodiment are typically trimmed so that the number of pixels is 100 pixels in the vertical direction and 100 pixels in the horizontal direction, but the size of the image is not limited to this. The number of pixels can be appropriately set between 50 to 500 pixels in the vertical direction and 50 to 500 pixels in the horizontal direction. The number of pixels in the vertical direction and the number of pixels in the horizontal direction of the image do not necessarily have to be the same. However, a training image 70 for training the first artificial intelligence algorithm 50 and an analysis image 80 for generating integrated analysis data 82 to be input in the first artificial intelligence algorithm 60 trained using the training image 70 have the same number of pixels and preferably the same number of pixels in the vertical direction and the horizontal direction.
iv. In this embodiment, the training image 70 and the analysis image 80 use a 16-bit grayscale image. However, the gradation of brightness may be 8 bits, 32 bits, or the like in addition to 16 bits. Although, the numerical value for brightness expressed in 16 bits (65, 536 gradations) is used directly in the present embodiment, these numerical values also may be subjected to a low-dimensional processing for summarizing them with gradations having a constant width, and these low-dimensional numerical values may be used as the numerical training data 71PA, 71PB, 71NA, 71NB. In this case, it is preferable to perform the same processing on the training image 70 and the analysis image 80.
v. The chromosomal abnormalities that can be detected in this embodiment are not limited to the PML-RARA chimeric gene. For example, BCR/ABL fusion gene, AML1/ETO (MTG8) fusion gene (t (8; 21)), PML/RARα fusion gene (t (15; 17)), AML1 (21q22) translocation, MLL (11q23) translocation, TEL (12p13) translocation, TEL/AML1 fusion gene (t (12; 21)), IgH (14q32) translocation, CCND1 (B)CL1)/IgH fusion gene (t (11; 14)), BCL2 (18q21) translocation, IgH/MAF fusion gene (t (14; 16)), IgH/BCL2 fusion gene (t (14; 18)), c-myc/IgH fusion gene (t (8; 14)), FGFR3/IgH fusion gene (t (4; 14)), BCL6 (3q27) translocation, c-myc (8q24) translocation, MALT1 (18q21) translocation, API2/MALT1 fusion gene (t (11; 18) translocation), TCF3/PBX1 fusion gene (t (1; 19) translocation), EWSR1 (22q12) translocation, PDGFRβ (5q32) translocation and the like can be detected.

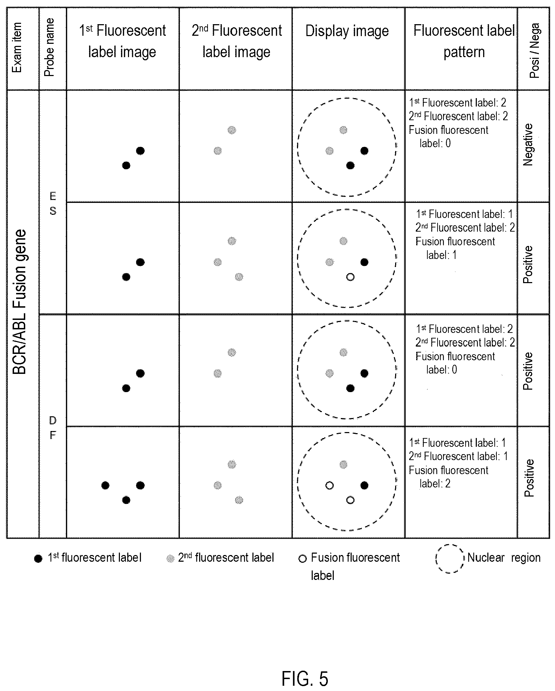

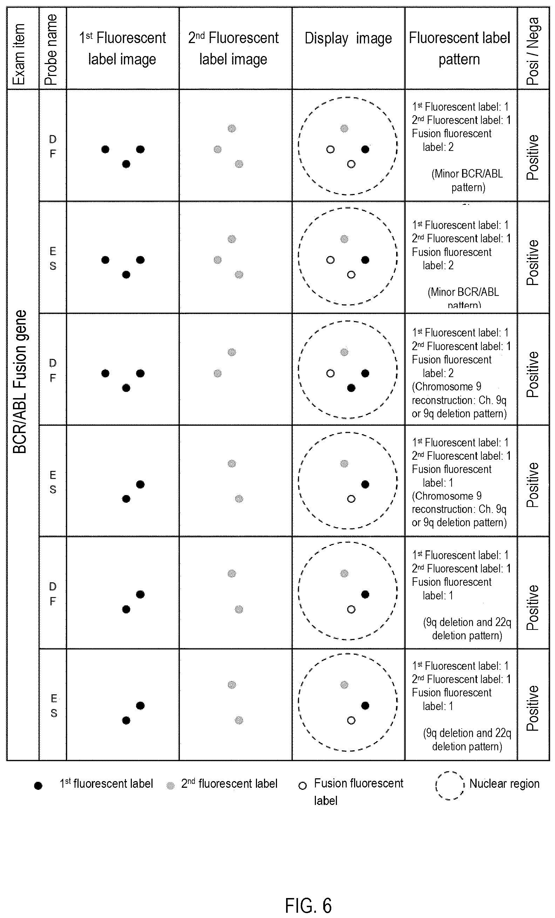

Also, translocations can include various variations. FIGS. 5 and 6 show examples of fluorescent labeling of a typical positive pattern (major pattern) of the BCR/ABL fusion gene. In the state in which the first fluorescent label image and the second fluorescent label image are superimposed and the ES probe is used, negative cases have two first fluorescent labels and two second fluorescent labels, and the number of fusion fluorescent labeled images is zero. In the typical positive pattern using the ES probe, the number of the first fluorescent labels is 1, the number of the second fluorescent labels is 2, and the number of fusion fluorescent labels is 1. When the DF probe is used and the first fluorescent label image and the second fluorescent label image are superimposed, the negative pattern has two first fluorescent labels and two second fluorescent labels, and the number of fusion fluorescent labels is zero. In the typical positive pattern example using the DF probe, the number of the first fluorescent labels is 1, the number of the second fluorescent labels is 1, and the number of fusion fluorescent labels is 2.

FIG. 6 is an example of a fluorescent labeling of an atypical positive pattern of the BCR/ABL fusion gene. One example of the atypical positive pattern is the minor BCR/ABL pattern, in which the cut point of the BCR gene is relatively upstream of the BCR gene, so that the ES probe also detects three first fluorescent labels. Another example of the atypical positive pattern is the deletion of a part of the binding region of the probe targeting the ABL gene on chromosome 9, and dependent on this, only one fusion fluorescent label is detected whereas two should be detected when the DF probe is used. In another example of the atypical positive pattern, a part of the binding region of the probe targeting the ABL gene on chromosome 9 and a part of the binding region of the probe targeting the BCR gene on chromosome 22 are both deleted. Dependent on this, only one fusion fluorescent label is detected whereas two should be detected when the DF probe is used.

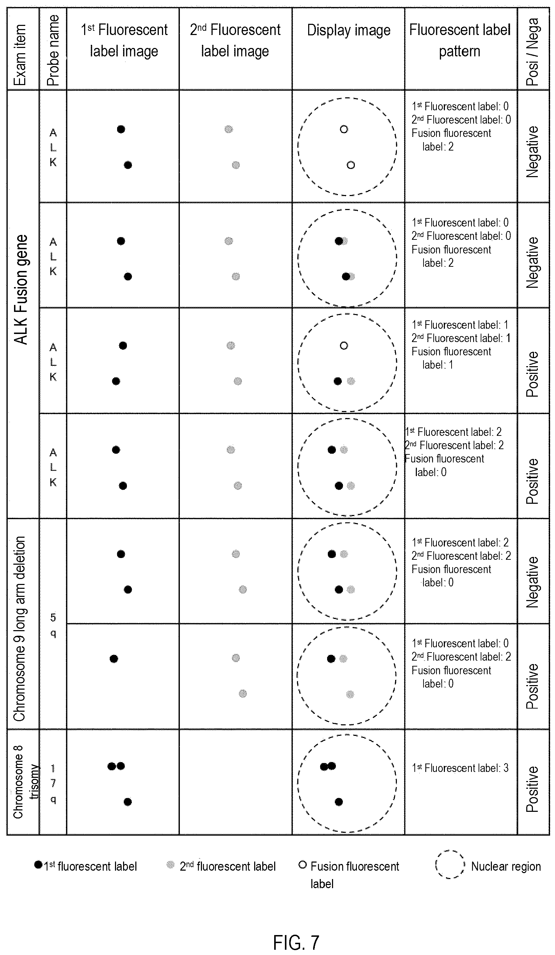

FIG. 7 shows an example of a negative pattern and a reference pattern of a positive pattern when detecting a chromosomal abnormality related to the ALK locus is detected. In the negative pattern, the ALK gene is not cleaved, so there are two fusion fluorescent labels. On the other hand, in the positive pattern, since the ALK gene is cleaved, only one fusion fluorescent label is present (when only one of the alleles is cleaved), or the fusion fluorescent label is not recognized (both alleles). If is disconnected). The negative pattern and the positive pattern are the same for the ROS1 gene and the RET gene as well as the ALK gene.

FIG. 7 shows an example of a reference pattern of a chromosomal abnormality in which the long arm (5q) of chromosome 5 is deleted. For example, the first fluorescently labeled probe is designed to bind to the long arm of chromosome 5, and the second fluorescently labeled probe is designed to bind to the centromere of chromosome 5. In the negative pattern, the number of centromeres on chromosome 5 and the number of long arms on chromosome 5 are the same, so the first fluorescent label and the second fluorescent label reflect the number of homologous chromosomes, that is, two each. In the positive pattern, deletion of the long arm occurs on one or both of chromosome 5, and the number of the first fluorescent labels is only 1 or 0. This negative and positive pattern is the same for deletions of the short or long arms of other chromosomes. Examples of long-arm deletions of other chromosomes include long-arm deletions of chromosomes 7 and 20. Examples showing similar positive and negative patterns include 7q31 (deletion), p16 (9p21 deletion analysis), IRF-1 (5q31) deletion, D20S108 (20q12) deletion, D13S319 (13q14) deletion, 4q12 deletion, ATM (11q22.3) deletion, p53 (17p13.1) deletion and the like.

FIG. 7 also shows an example of chromosome 8 trisomy. The first fluorescently labeled probe binds, for example, to the centromere on chromosome 8. The positive pattern has three first fluorescent labels. The negative pattern has two first fluorescent labels. Such a fluorescent labeling pattern is the same in trisomy 12 of chromosome. In the chromosome 7 monosomy, for example, when a first fluorescently labeled probe that binds to the centromere of chromosome 7 is used, the positive pattern is one first fluorescent label. The negative pattern has two first fluorescent labels.

### 2-2. Artificial Intelligence Algorithm for Detecting Peripheral Circulating Tumor Cells

The present embodiment relates to a method for training a first artificial intelligence algorithm 63 for detecting peripheral circulating tumor cells and a method for analyzing cells using the first artificial intelligence algorithm 63 for detecting peripheral circulating tumor cells. Here, the term "train" or "training" may be used in place of the term "generate" or "generating".

### (1) Training Data Generation

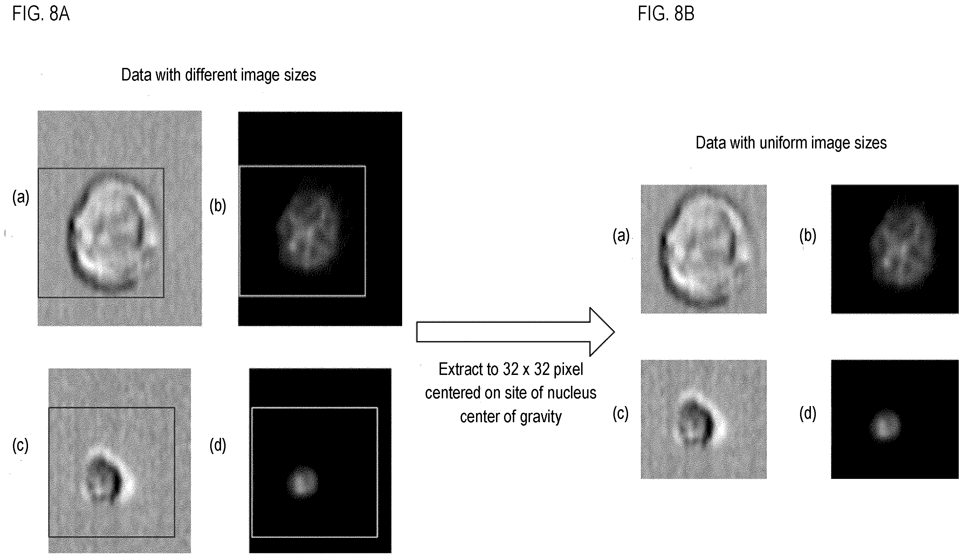

The training method of the first artificial intelligence algorithm 53 for detecting peripheral circulating tumor cells will be described with reference to FIGS. 8 to 10.

FIG. 8 shows a preprocessing method for an image captured by the imaging unit 160. FIG. 8A shows an captured image before pretreatment. The preprocessing is a trimming process for making the training image 75 and the analysis image 85 the same size, and can be performed on all the images used as the training image 75 or the analysis image 85. In FIG. 8A, (a) and (b) are images of the same cell, but the channels at the time of imaging are different. In FIG. 8A, (c) and (a) are images of different cells. Although (c) and (d) are images of the same cell, the channels when imaging are different. As shown in (a) and (c) of FIG. 8A, the size of the image when the cells are imaged may be different. In addition, the size of the cell itself also may differ depending on the cell. Therefore, it is preferable to crop the acquired image so as to reflect the size of the cells and have the same image size. In the example shown in FIG. 8, a position separated by 16 pixels in the vertical direction and the horizontal direction from the center is set as a trimming position with the center of gravity of the nucleus of the cell in the image as the center. The image cut out for trimming is shown in FIG. 8B. FIG. 8B (a) is an image extracted from FIGS. 8A (a), FIG. 8B (b) is an image extracted from FIG. 8A (b), FIG. 8B (c) is an image extracted from FIG. 8A (c), and FIG. 8B (d) is an image extracted from FIG. 8A (d). Each image in FIG. 8B has a length of 32 pixels and a width of 32 pixels. The center of gravity of the nucleus can be determined, for example, by using the analysis software (IDEAS) attached to an imaging flow cytometer (ImageStream MarkII, Luminex).

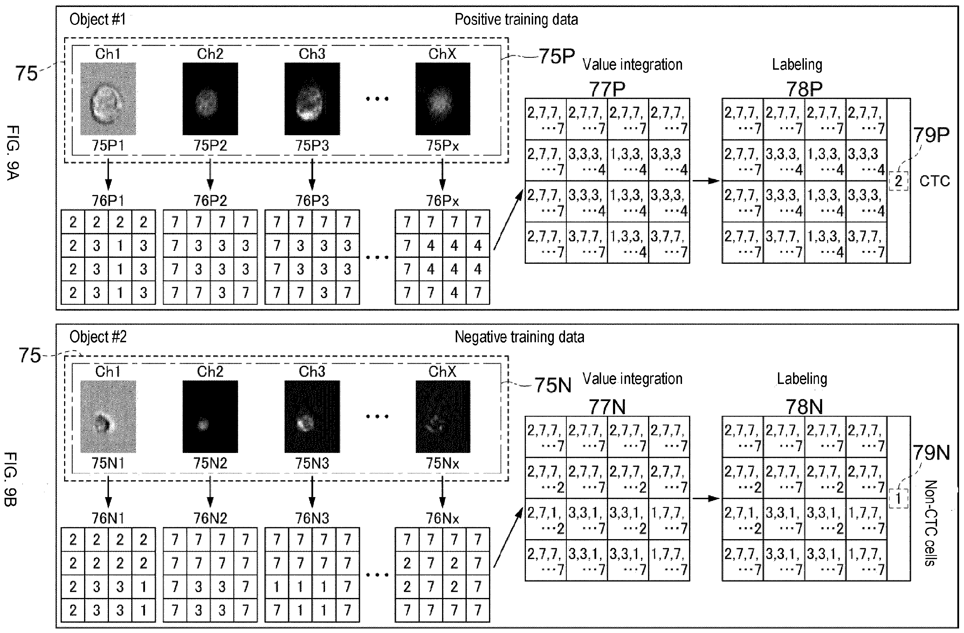

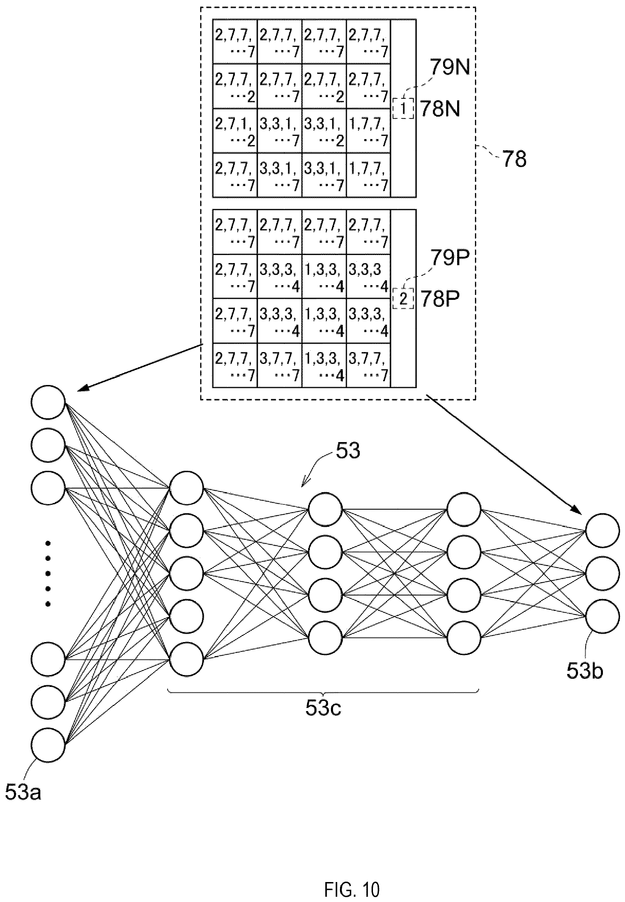

FIGS. 9 and 10 show a training method for the first artificial intelligence algorithm 53.

As shown in FIG. 9, positive integrated training data 78P and the negative integrated training data 78N are generated from a positive training image 75P obtained by imaging peripheral circulating tumor cells (hereinafter, referred to as "second positive control cell") and negative training image 75N obtained from cells other than peripheral circulating tumor (hereinafter, "second negative control cell"). The positive training image 75P and the negative training image 75N may be collectively referred to as a training image 75. The positive integrated training data 78P and the negative integrated training data 78N also may be collectively referred to as training data 78.

When detecting peripheral circulating tumor cells, the image captured by the imaging unit 160 may include a bright field image and a fluorescence image. The bright-field image can be an image of the phase difference of the cells. This imaging can be obtained, for example, on the first channel. The fluorescent image is an image of a fluorescent label labeled at a target site in the cell by immunostaining or intracellular organelle staining. Fluorescent labeling is performed with fluorescent dyes that have different fluorescence wavelength regions for each antigen and / or each organelle.

For example, when the first fluorescent dye that emits fluorescence in the first green wavelength region is bound to the first antigen, the first antigen can be labeled with the first fluorescent dye by binding the first fluorescent dye to an antibody that directly or indirectly binds to the first antigen.

When a second fluorescent dye that emits fluorescence in a red wavelength region different from that of the first fluorescent dye is bound to an antibody that binds to the second antigen, the second antigen can be labeled with the second fluorescent dye by binding the second fluorescent dye to an antibody that directly or indirectly binds to the second antigen.

When the antibody that binds to the third antigen is bound to the first fluorescent dye and the third fluorescent dye that emits fluorescence in a yellow wavelength region different from that of the second fluorescent dye, the third antigen can be labeled with a third fluorescent dye by binding the third fluorescent dye to an antibody that directly or indirectly binds to the third antigen.

In this way,fluorescent dyes with different fluorescence wavelength regions can be labeled from the first fluorescence label to the Xth fluorescence label.

A sample containing cells having the first fluorescent label to the Xth fluorescent label can be subjected to imaging with a cell imaging device such as an imaging flow cytometer, and an image of the cells can be obtained. An image taken of a cell may include multiple images for the same field of view of the same cell. Since the first fluorescent label to the Xth fluorescent label have different fluorescence wavelength regions of each fluorescent dye, the filter for transmitting the light emitted from each fluorescent dye is different for each fluorescent dye. The bright field image requires the use of a filter different from the filter that transmits light from the fluorescent dye. Therefore, the light transmitted through each filter is taken into the imaging unit 160 (described later) via each corresponding channel, and is captured as another image of the same cell in the same field of view. That is, in the imaging unit 160, for the same visual field of the same cell, a plurality of images corresponding to the number obtained by adding the number of bright-field images to the number of labeling substances labeling the cells are acquired.

In the example shown in FIG. 9, the first channel (Ch1) indicates a bright-field image in FIGS. 9A and 9B. In FIGS. 9A and 9B, the second channel (Ch2), the third channel (Ch3), ... the Xth channel (ChX) refer to each channel in which a plurality of different labeling substances are imaged.

In the example of FIG. 9, as shown in FIG. 9A, the positive training image 75P includes the first positive training image 75P1 imaged through the first channel of the second positive control cell, a second positive training image 75P2 in which the first fluorescent label is imaged via the second channel, a third positive training image 75P3 in which the second fluorescent label is imaged via the third channel, and the like on up to an Xth positive training image 75Px in which each fluorescent label is imaged on up to the Xth channel. Images from the first positive training image 75P1 to the Xth positive training image 75Px are associated as images of the same visual field of the same cell. Images from the first positive training image 75P1 to the Xth positive training image 75P are converted to the first positive numerical training data 76P1 to the Xth positive training data 76Px which numerically indicate the brightness of the imaged light in each pixel in the image.

A method of generating the first positive numerical training data 76P1 will be described with reference to the first positive training image 75P1. Each image captured by the imaging unit 160 is trimmed, for example, to 32 pixels in length × 32 pixels in width by the above-mentioned preprocessing to obtain a training image 75. The first positive training image 75P1 is represented, for example, as a 16-bit grayscale image. Therefore, in each pixel, the brightness of the pixel can be indicated by a numerical value of the brightness of 65,536 gradations from 1 to 65,536. As shown in FIG. 9A, the values indicating the gradation of brightness in each pixel of the first positive training image 75P1 are the first positive numerical training data 76P1, which is a matrix of numbers corresponding to each pixel.

Similar to the first positive numerical training data 76P1, the Xth positive numerical training data 76Px can be generated from the second positive numerical training data 76P2 which numerically indicate the brightness of the imaged light for each pixel in the image from the second positive training image 75P2 to the Xth positive training image 75Px.

Next, the first positive numerical training data 76P1 to the Xth positive numerical training data 76Px are integrated for each pixel to generate positive integrated training data 77P. As shown in FIG. 9A, in the positive integrated training data 77P become matrix data in which the numerical values in each pixel of the first positive numerical training data 76PA are shown side by side with the values of each pixel corresponding to the second positive numerical training data 76P2 to the X positive numerical training data 76Px.

Next, the positive integrated training data 77P is labeled with a label value 79P indicating that the positive integrated training data 77P is derived from the second positive control cell, then labeled positive integrated training data 78P are generated. "2" is attached in FIG. 9A as a label indicating that it is a second positive control cell.

From the negative training image 75N, the labeled negative integrated training data 78N are generated in the same manner as in the case of generating the labeled positive integrated training data 78P.

As shown in FIG. 9B, the negative training image 75N includes from the first negative training image o75N1 to the Xth negative training image 75Nx obtained from the first channel via the Xth image for the second negative control cell, similarly to the positive training image 75P. The quantification of the brightness of light in each pixel is identical to the case when the first positive numerical training data 76P1 to Xth positive numerical training data 76Px are acquired from the the first positive training image 75PA to the Xth positive training image 75P. First negative numerical training data 76N1 indicating the brightness of the imaged light numerically can be generated for each pixel in the image from the first negative training image 75N1 by the same method as the first positive numerical training data 76P1.

Similarly, from the second negative numerical training data 76N2 to the Xth negative numerical training data 76Nx indicating the brightness of the imaged light numerically can be generated for each pixel in the image from the second negative training image 75N2 to the Xth second training image 75Nx.

As shown in FIG. 9B, the first negative numerical training data 76N1 to the Xth negative numerical training data 76Nx are integrated for each pixel according to the method of generating the positive integrated training data 77P to generate the negative integrated training data 77N. As shown in FIG. 9B, in the negative integrated training data 77N become matrix data in which the numerical values in each pixel of the first negative numerical training data 76N1 are shown side by side with the values of each pixel corresponding to the second negative numerical training data 76N2 to the Xth negative numerical training data 76Nx.

Next, the negative integrated training data 77N is labeled with a label value 79N indicating that the negative integrated training data 77N is derived from the second negative control cell, and labeled negative integrated training data 78N are generated. "1" is attached in FIG. 9B as a label indicating that it is a second negative control cell.

FIG. 10 shows a method of inputting the labeled positive integrated training data 78P generated in the first artificial intelligence algorithm 53 and the labeled negative integrated training data 78N. The number of nodes of the input layer 53a in the first artificial intelligence algorithm 53 having a neural network structure corresponds to the sum of the number of pixels of the training image 75 (32 × 32 = 1024 in the above example) and the number of channels for one cell (X channels from 1 to X in the above example). Data equivalent to the positive integrated training data 77P of the labeled positive integrated training data 78P are input to the input layer 53a of the neural network. A label value 79P corresponding to the data input to the input layer 53a is input to the output layer 53b of the neural network. Data corresponding to the negative integrated training data 77N of the labeled negative integrated training data 78N are input to the input layer 53a of the neural network. A label value 79N corresponding to the data input to the input layer 53a is input to the output layer 53b of the neural network. With these inputs, each weight in the intermediate layer 53c of the neural network is calculated, the first artificial intelligence algorithm 53 is trained, and the trained first artificial intelligence algorithm 63 is generated.

### (2) Analysis Data Generation

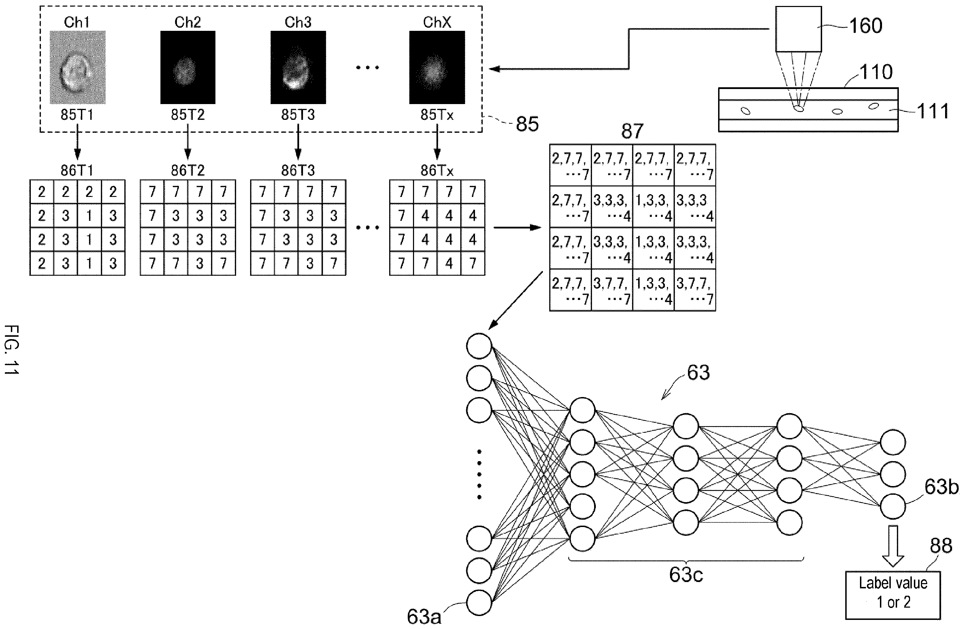

The method of generating the integrated analysis data 72 and the cell analysis method using the trained first artificial intelligence algorithm 63 will be described from the analysis image 85 with reference to FIG. 11. The analysis image 85 can be captured and preprocessed in the same manner as the training image 75 was captured.

As shown in FIG. 11, the analysis image 85 includes a first analysis image 85T1, that is, a bright-field image of the cells to be analyzed taken through the first channel, and the Xth analysis image 85Tx obtained from the second analysis image 85T2 of the imaged Xth fluorescence label taken through the Xth channel from the second channel. Imaging and preprocessing, and quantification of the brightness of light in each pixel are the same as in the case of acquiring the first positive numerical training data 76P1 from the first positive training image 75P1. Using the same method as the first positive numerical training data 76P1, the first numerical analysis data 86T1 which numerically indicates the brightness of the captured light at each pixel in the image is generated from the first analysis image 85T1.

Similarly, from the second analysis image 85T2 to the Xth analysis image 85Tx, the Xth numerical analysis data 86Tx can be generated from the second numerical analysis data 86T2 numerically indicating the brightness of the captured light in each pixel in the image.

As shown in FIG. 11, the cells flowing through the flow cell 110 were imaged according to the method for generating the positive integrated training data 77P, and the generated first numerical analysis data 86T1 to the Xth numerical analysis data 86Tx are used to generate the the integrated analysis data 87 for each pixel. As shown in FIG. 11, the integrated analysis data 87 become matric data in which the numerical value in each pixel of the first numerical analysis data 86T1 are shown side by side with the value in each pixel corresponding to the second numerical analysis data 86T2 to the Xth numerical analysis data 86Tx.

As shown in FIG. 11, the cells flowing through the flow cell 11 are imaged by the imaging unit 160 to generate an analysis image 85. By imaging the cells flowing through the flow cell 110, a large number of analysis images 80 can be generated in a short time, and a large number of cells can be analyzed in a short time. Although the number of abnormal cells contained in a sample may be very small compared to the number of normal cells that should originally exist in the sample, according to the current analysis method, which enables analysis of a large number of cells in a short time, It is possible to suppress overlooking abnormal cells. The generated integrated analysis data 87 are input to the input layer 63a of the neural network in the trained first artificial intelligence algorithm 63. The value included in the input integrated analysis data 87 outputs a label value 89 indicating whether the analysis target cell is a peripheral circulating tumor cell from the output layer 63b of the neural network via the intermediate layer 63c of the neural network. To do. In the example shown in FIG. 11, "1" is output as a label value when it is determined that the cell to be analyzed is not a peripheral circulating tumor cell, and "2" is output as a label value when it is determined to be a peripheral circulating tumor cell. Instead of the label value, labels such as "none", "yes", "normal", and "abnormal" also may be output.

### (3) Other Configurations

i. The training image 75 and the analysis image 85 used in the present embodiment are preferably images that have not been restored with respect to the images captured by using the EDF filter.
ii. Out-of-focus images can be excluded from the training image 75 and the analysis image 85 during imaging.
iii. Although the training image 75 and the analysis image 85 used in the present embodiment are typically trimmed so that the number of pixels is 32 pixels in the vertical direction and 32 pixels in the horizontal direction, the size of the image is not limited insofar as the entire cell is contained in the image. The number of pixels in the vertical direction and the number of pixels in the horizontal direction of the image do not necessarily have to be the same. However, a training image 75 for training the first artificial intelligence algorithm 53 and an analysis image 85 for generating integrated analysis data 87 to be input to the first artificial intelligence algorithm 63 trained using the training image 75 preferably have the same number of pixels in the vertical direction and the horizontal direction.
iv. In this embodiment, the training image 70 and the analysis image 80 use a 16-bit grayscale image. However, the gradation of brightness may be 8 bits, 32 bits, or the like in addition to 16 bits. Although, for each numerical training data 76P1 to numerical training data 76Px and numerical training data 76N1 to numerical training data 76Nx, the numerical values of the brightness represented by 16 bits (65,536 gradations) are used directly in the present embodiment, these numerical values are subjected to a low-dimensional processing that summarizes them with a gradation of a certain width, and the numerical values after the low dimensional processing also may be used as the numerical training data 76Px from each numerical training data 76P1 and the numerical training data 76Nx from the numerical training data 76N1. In this case, it is preferable to perform the same processing on the training image 70 and the analysis image 80.

### 3. Cell Analysis Method Using a Second Artificial Intelligence Algorithm

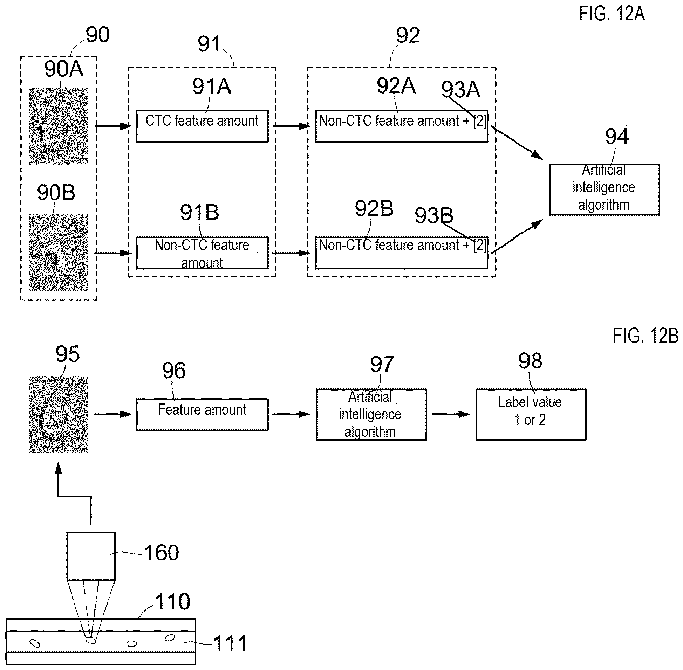

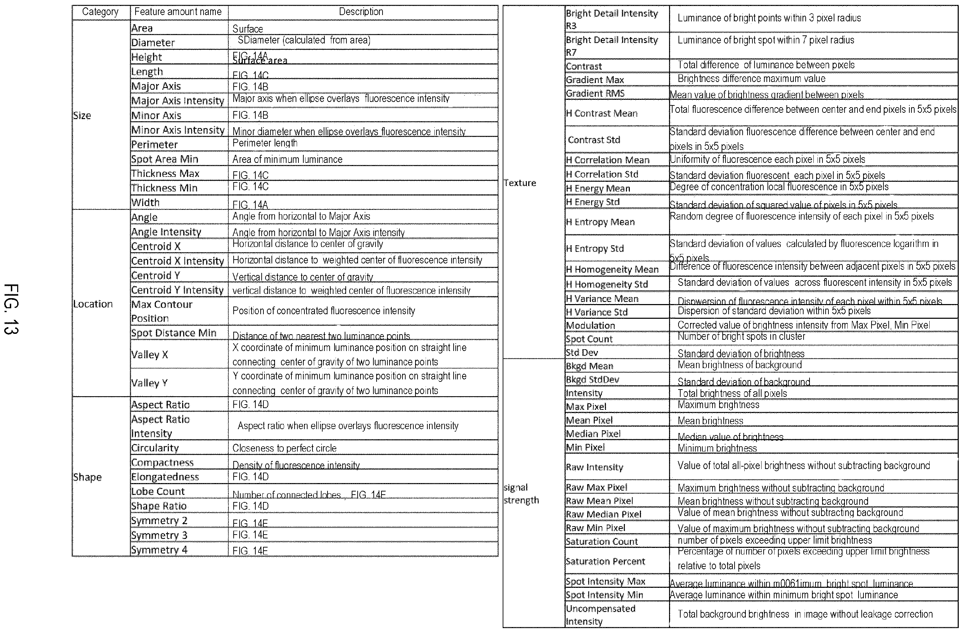

The training method of the second artificial intelligence algorithm 94 and the cell analysis method using the trained second artificial intelligence algorithm 97 will be described with reference to FIGS. 12 and 13. The second artificial intelligence algorithms 94 and 97 can be algorithms other than the deep learning algorithm having a neural network structure. The second artificial intelligence algorithm 94 extracts a user-defined feature amount from the above-mentioned second positive control cell or second negative control cell, and the extracted feature amount and the corresponding second positive control cell. Alternatively, it is trained using a label indicating the properties of the second negative control cell as training data. In addition, the trained second artificial intelligence algorithm 97 extracts the feature amount corresponding to the feature amount extracted when generating the training data from the analysis target image, and data showing the properties of cells are generated using the feature amount as analysis data.

In this embodiment, examples of the algorithms that can be used as the second artificial intelligence algorithms 94 and 97 include random forest, gradient boosting, support vector machine (SVM), relevance vector machine (RVM), naive bays, logistic regression, feed, Forward Neural Network, Deep Learning, K-Nearest Neighbor Method, AdaBoost, Bagging, C4.5, Kernel Approximation, Stochastic Gradient Descent (SGD) Classifier, Lasso, Ridge Regression, Elastic Net, SGD Regression, Kernel Regression, Lowess Regression, matrix fructization, non-negative matrix fructization, kernel matrix fructization, interpolation method, kernel smoother, co-filtering and the like. The second artificial intelligence algorithms 94,97 are preferably random forest or gradient boosting.

As the second artificial intelligence algorithms 94 and 97, for example, those provided by Python can be used.

Here, the term "train" or "training" may be used in place of the term "generate" or "generating".

### (1) Training Data Generation

As shown in FIG. 12A, in the present embodiment positive training data 91A and negative training data 91B are generated from the positive training image 90A obtained by imaging the second positive control cell used in section 2-2 above and the second negative control cell used in section 2-2 above. The positive training image 90A and the negative training image 90B may be collectively referred to as training image 90. The positive training data 91A and the negative training data 91B also may be collectively referred to as training data 91.

When detecting peripheral circulating tumor cells, the image captured by the imaging unit 160 (described later), which is used as the training image 90, may be a bright-field image and/or a fluorescent image as in section 2-2 above. The bright-field image can be an image of the phase difference of the cells. The training image 90 can be acquired in the same manner as in section 2-2(1) above.

As the training data 91, for example, the feature amount shown in FIG. 13 can be exemplified. The features shown in FIG. 13 can be classified into five categories. The categories include information about cell size (Size), information about cell location (Location), information about cell shape (Shape), information about cell texture (Texture), as well as light intensity (Signal strength) obtained from cell images. Details of the features included in each category are as shown in FIG. 13. These feature quantities can be used in combination of 1 or 2 or more. The feature amount preferably contains at least one piece of information selected from information about cell size. More preferably, it is desirable that the feature amount contains at least information on the area of the cells. These feature quantities can be determined using, for example, the above-mentioned analysis software (IDEAS).

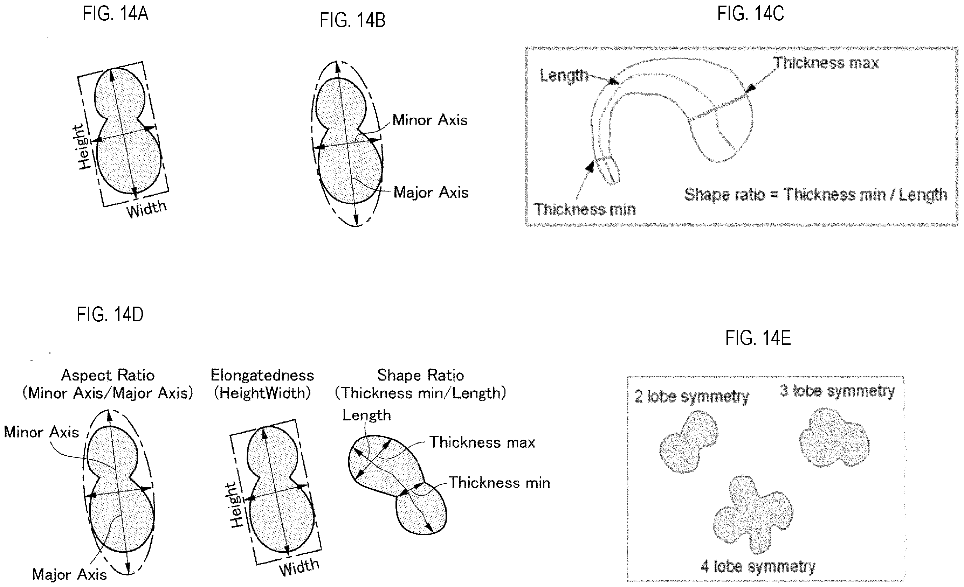

FIG. 14 shows a description of typical features. FIG. 14A shows a description of Height and Width in FIG. 13. Height is, by way of example, intended to be the length of the long side (one side in the case of a square) of the smallest quadrangle (preferably a regular rectangle, or square) that can circumscribe the cell on the image. By way of example, the width is intended to be the length of the short side (one side in the case of a square) of the quadrangle. FIG. 14B shows a description of Major Axis (major axis) and Minor Axis (minor axis) in FIG. 13. The Major Axis is, for example, an ellipse (preferably a regular ellipse) that can surround the cell on the image, and the center of gravity of the ellipse overlaps with the center of gravity of the cell and it is intended that the long diameter of the smallest ellipse can surround the cell. Minor Axis is intended for the short diameter of the ellipse. The Minor Axis is, by way of example, intended to be the short diameter of the ellipse.

FIG. 14C shows a description of cell length, thickness max (maximum thickness), and thickness min (minimum thickness). The length of the cell is different from the height shown in FIG. 14A, and is intended to be the length of the longest line when assuming a line segment connecting one tip and the other tip of the cell on the image. The Thickness Max is intended to be the longest line segment, assuming an inner line segment that is orthogonal to the line segment representing the Length and is separated by the contour line of the cell. Thickness min is intended to be the shortest line segment length, assuming an inner line segment that is orthogonal to the line segment representing the Length and is separated by the contour line of the cell.

FIG. 14D shows an explanation of Aspect Ratio, Elongatedness (elongation), and Shape Ratio. Aspect Ratio is the value obtained by dividing the length of Minor Axis by the length of Major Axis. Elongatedness is the value obtained by dividing the value of Height by the value of Width. The Shape Ratio is a value obtained by dividing the value of Thickness min by the value of Thickness Max.

FIG. 14E shows a description of lobe symmetry (splitting). FIG. 14E shows an example of 2 lobe symmetry (2 lobes), 3 lobe symmetry (3 lobes), and 4 lobe symmetry (4 lobes). Splitting is one cell divided into lobes.

As shown in FIG. 12A, the positive training data 91A are combined with a label value of 93A, for example, "2", indicating that it is derived from the second positive control cell, and input to the second artificial intelligence algorithm 94 as labeled positive training data 92A. Negative training data 91B are combined with a label value 93B, for example, "1", indicating that it is derived the second negative control cell, and input to the second artificial intelligence algorithm 94 as labeled negative training data 92B. The second artificial intelligence algorithm 94 is trained by the labeled positive training data 92A and the labeled negative training data 92B.

Although only the bright field image is shown in the example of FIG. 12, when a plurality of fluorescent labels are imaged using a plurality of channels as shown in section 2-2 above, positive training data 91A and negative training data 91B are acquired for each channel, the respective labeled positive training data 92A and labeled negative training data 92B are generated and input to the second artificial intelligence algorithm 94.

Here, the labeled positive training data 92A and the labeled negative training data 92B are also collectively referred to as training data 92.

The training data 92 trains the second artificial intelligence algorithm 94, and the trained second artificial intelligence algorithm 97 is generated.

### (2) Analysis Data Generation and Cell Analysis

FIG. 12B shows a cell analysis method in which analysis data 96 is generated from a third analysis image 95 of images of cells flowing through the flow cell 110 and a trained second artificial intelligence algorithm 97 is used. The trained second artificial intelligence algorithm 97 uses the analysis data 96 to generate data 98 indicating the properties of the cells to be analyzed. As shown in FIG. 12B, the cells flowing through the flow cell 110 are imaged by the imaging unit 160 to generate a third analysis image 95. The analysis data 96 can be generated from the third analysis image 95 captured in the same manner as the training image 90. The analysis data 96 is preferably a feature amount corresponding to the third training data.

As data indicating normality or abnormality of cells, data 98 indicating whether the cells to be analyzed are peripheral circulating tumor cells are generated by inputting the analysis data 96 into the trained second artificial intelligence algorithm 97. For example, "1" is output as a label value when it is determined that the cell to be analyzed is not a peripheral circulating tumor cell, and "2" is output as a label value when it is determined that the cell is a peripheral circulating tumor cell. Instead of the label value, labels such as "none", "yes", "normal", and "abnormal" also may be output.

### 4. Cell Analysis System

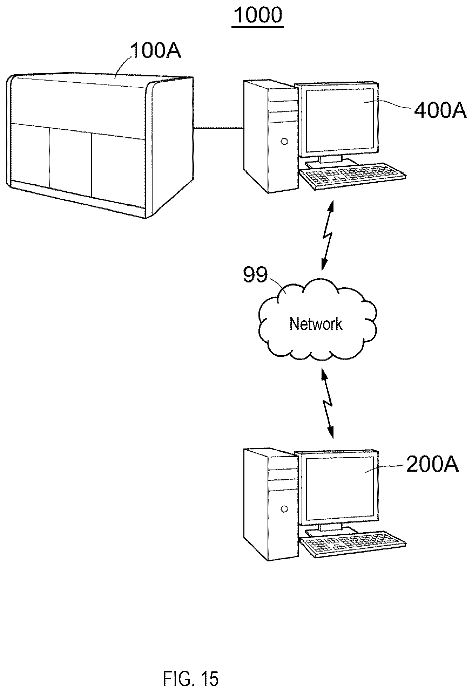

Hereinafter, the cell analysis systems 1000, 2000, and 3000 according to the first to third embodiments will be described with reference to FIGS. 15 to 25. In the following description, the first artificial intelligence algorithm 50, the first artificial intelligence algorithm 53, and the second artificial intelligence algorithm 94 may be referred to as "artificial intelligence algorithms" without distinction.

### 4-1. First Embodiment of a Cell Analysis System

FIG. 15 shows the hardware structure of the cell analysis system 1000 according to the first embodiment. The cell analysis system 1000 may include a training device 200A for training the artificial intelligence algorithm 94, a cell imaging device 100A, and a cell analysis device 400A. The cell imaging device 100A and the cell analysis device 400A are communicably connected. The training device 200A and the cell analysis device 400A also can be connected by a wired or wireless network.

### 4-1-1. Training Device

### (1) Hardware Structure

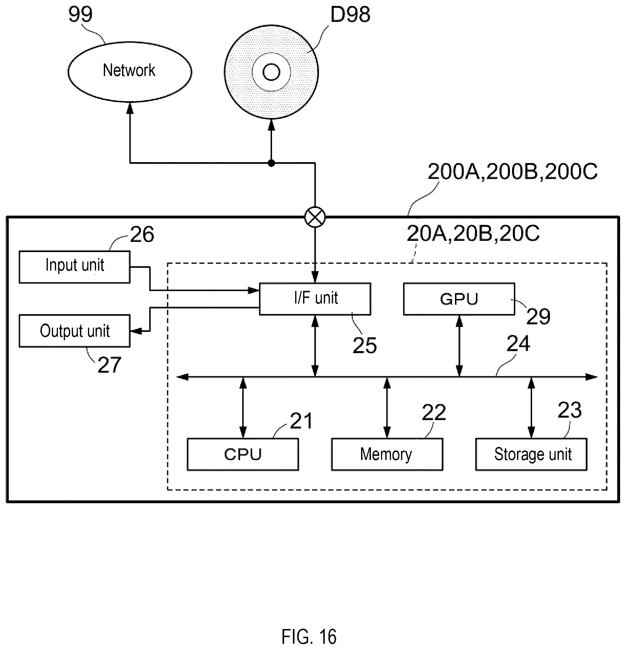

The hardware structure of the training device 200A will be described with reference to FIG. 16. The training device 200A includes a control unit 20A, an input unit 26, an output unit 27, and a media drive D98. The training device 200A can be connected to the network 99.

The control unit 20A includes a CPU (Central Processing Unit) 21 that performs data processing described later, a memory 22 used as a work area for data processing, a storage unit 23 that records a program and processing data described later, a bus 24 for transmitting data among each of the units, an interface (I/F) unit 25 for inputting/outputting data to/from an external device, and a GPU (Graphics Processing Unit) 29. The input unit 26 and the output unit 27 are connected to the control unit 20A via the I/F unit 25. Illustratively, the input unit 26 is an input device such as a keyboard or a mouse, and the output unit 27 is a display device such as a liquid crystal display. The GPU 29 functions as an accelerator that assists in arithmetic processing (for example, parallel arithmetic processing) performed by the CPU 21. In the following description, the processing performed by the CPU 21 means that the processing performed by the CPU 21 using the GPU 29 as an accelerator is also included. Here, instead of GPU29, a chip which is preferable for the calculation of the neural network may be provided. Examples of such a chip include FPGA (Field-Programmable Gate Array), ASIC (Application Specific Integrated Circuit), Myriad X (Intel), and the like.

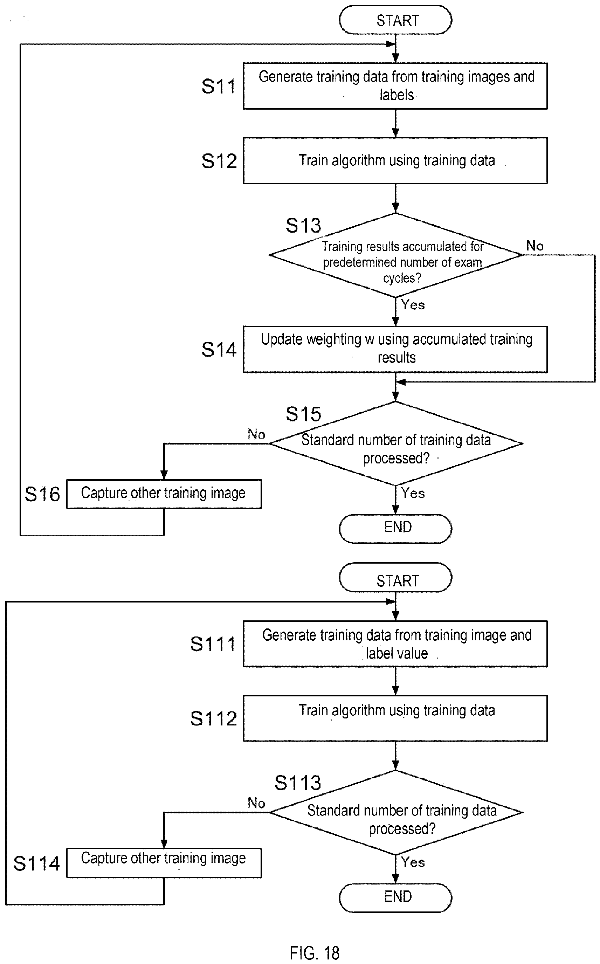

The control unit 20A sends a training program for training the artificial intelligence algorithm and an artificial intelligence algorithm in advance and in an executable format to the storage unit 23, for example, in order to perform the processing of each step described with reference to FIG. 18. The executable format is, for example, a format generated by being converted by a compiler from a programming language. The control unit 20A makes the operating system and the training program recorded in the storage unit 23 cooperate with each other to perform training processing of the artificial intelligence algorithm prior to the training.

In the following description, unless otherwise specified, the processing performed by the control unit 20A means the processing performed by the CPU 21 or the CPU 21 and the GPU 29 based on the program and the artificial intelligence algorithm stored in the storage unit 23 or the memory 22. The CPU 21 temporarily stores necessary data (intermediate data during processing and the like) using the memory 22 as a work area, and appropriately records data to be stored for a long period of time, such as a calculation result, in the storage unit 23.

### (2) Function Structure of Training Device

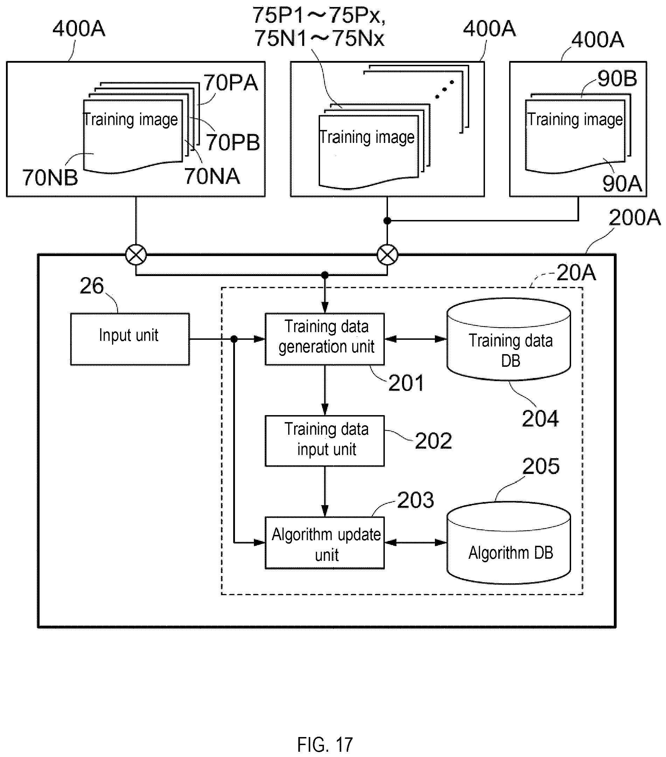

FIG. 17 shows the function structure of the training device 200A. The training device 200A includes a training data generation unit 201, a training data input unit 202, an algorithm update unit 203, a training data database (DB) 204, and an algorithm database (DB) 205. Step S11 shown in FIG. 18A and step S111 shown in FIG. 18B correspond to the training data generation unit 201. Step S12 shown in FIG. 18A and step S112 shown in FIG. 18B correspond to the training data input unit 202. Step S14 shown in FIG. 18A corresponds to the algorithm update unit 203.

The 75Nx, 90A and 90B from the 75Pxm 75Nx and 75N1, which are from the 70PA, 70PB, 70NA, 70NB and 75P1 are acquired beforehand from the cell imaging device 100A by the cell analysis device 400A, and prestored in the storage unit 23 or the memory 22 of the control unit 20A of the training device 200A. The training device 200A also may acquire the training images 70PA, 70PB, 70NA, 70NB, 75P1 to 75Px, 75N1 to 75Nx, 90A, 90B from the cell analyzer 400A via the network, or via the media drive D98. The training data database (DB) 204 stores the generated training data 73, 78, 92. The pre-training artificial intelligence algorithm is pre-stored in the algorithm database 205. The trained first artificial intelligence algorithm 60 can be recorded in the algorithm database 205 in association with the test items and analysis items for testing for chromosomal abnormalities. The trained first artificial intelligence algorithm 63 can be recorded in the algorithm database 205 in association with the test and analysis items for testing peripheral circulating tumor cells. The trained second artificial intelligence algorithm 97 can be recorded in the algorithm database 205 in association with the feature quantity item to be input.

### (3) Training Process

The control unit 20A of the training device 200A performs the training process shown in FIG. 18.

First, in response to a request from the user to start processing, the CPU 21 of the control unit 20A acquires the training images 70PA, 70PB, 70NA, 70NB stored in the storage unit 23 or the memory 22; then acquires the training 75 Nx or training images 90A and 90B from 75Px and 75N1 from the training image 75P1. Training images 70PA, 70PB, 70NA, 70NB are for training the first artificial intelligence algorithm 50, training images 75P1 to 75Px, and 75N1 to 75Nx are for training the first artificial intelligence algorithm 53, training images 90A and 90B are used to train the second artificial intelligence algorithm 94.

### i. First Artificial Intelligence Algorithm 50 Training Process

In step S11 of FIG. 18A, the control unit 20A generates positive integrated training data 72P from the positive training images 70PA and 70PB, and generates negative integrated training data 72N from the negative training images 70NA and 70NB. The control unit 20A assigns a label value 74P or a label value 74N corresponding to each of the positive integrated training data 72P and the negative integrated training data 72N, and generates a labeled positive integrated training data 73P or a labeled negative integrated training data 73N. The labeled positive integrated training data 73P or the labeled negative integrated training data 73N are recorded in the storage unit 23 as training data 73. The method for generating the labeled positive integrated training data 73P and the labeled negative integrated training data 73N is described in 2-1 above.

Next, the control unit 20A inputs the generated labeled positive integrated training data 73P and the labeled negative integrated training data 73N into the first artificial intelligence algorithm 50 in step S12 of FIG. 18A, and trains the first artificial intelligence algorithm 50. The training result of the first artificial intelligence algorithm 50 is aggregated each time the training is performed using the plurality of labeled positive integrated training data 73P and the labeled negative integrated training data 73N.

Subsequently, in step S13 of FIG. 18A, the control unit 20A determines whether the training results for a predetermined number of trials have been accumulated. When the training results are accumulated for a predetermined number of trials (when "YES"), the control unit 20A proceeds to the process of step S14, and when the training results are not accumulated for a predetermined number of trials ("NO"), the control unit 20A proceeds to the process of step S15.

When the training results are accumulated for a predetermined number of trials, in step S14, the control unit 20A updates the weighting (w) (coupling weight) of the first artificial intelligence algorithm 50 using the training results accumulated in step S12.

Next, in step S15, the control unit 20A determines whether the first artificial intelligence algorithm 50 has been trained with a predetermined number of labeled positive integrated training data 73P and labeled negative integrated training data 73N. When the training is performed with the specified number of labeled positive integrated training data 73P and the labeled negative integrated training data 73N (in the case of "YES"), the training process is terminated. The control unit 20A stores the trained first artificial intelligence algorithm 60 in the storage unit 23.

When the first artificial intelligence algorithm 50 is not trained with the specified number of labeled positive integrated training data 73P and the labeled negative integrated training data 73N (in the case of "NO"), the control unit 20A advances from step S15 to step S16 and the processes from step S11 to step S15 are performed on the next positive training images 70PA and 70PB and the negative training images 70NA and 70NB.

### ii. First Artificial Intelligence Algorithm 53 Training Process

In step S11 of FIG. 18A, the control unit 20A generates positive integrated training data 77P from positive training images 75P1 to 75Px, and generates negative integrated training data 77N from negative training images 75N1 to 75Nx. The control unit 20A assigns a label value 79P or a label value 79N corresponding to each of the positive integrated training data 77P and the negative integrated training data 77N, and generates labeled positive integrated training data 78P or labeled negative integrated training data 78N. The labeled positive integrated training data 78P or the labeled negative integrated training data 78N are recorded in the storage unit 23 as training data 78. The method for generating the labeled positive integrated training data 78P and the labeled negative integrated training data 78N is as described in 2-2 above.

Next, the control unit 20A inputs the generated labeled positive integrated training data 78P and the labeled negative integrated training data 78N into the first artificial intelligence algorithm 53 in step S12 of FIG. 18A, and trains the first artificial intelligence algorithm 53. The training result of the first artificial intelligence algorithm 53 is accumulated every time the training is performed using the plurality of labeled positive integrated training data 78P and the labeled negative integrated training data 78N.

Subsequently, in step S13 of FIG. 18, regarding the method for generating the labeled positive integrated training data 73P and the labeled negative integrated training data 73N is described in 2-1 above, the control unit 20A predetermines whether the training results have been accumulated for the predetermined number of trials. When the training results are accumulated for a predetermined number of trials (when "YES"), the control unit 20A proceeds to the process of step S14, and when the training results are not accumulated for a predetermined number of trials ("NO"), the control unit 20A proceeds to the process of step S15.

. When the training results are accumulated for a predetermined number of trials, in step S14, the control unit 20A uses the training results accumulated in step S12 to update the weight w (coupling weight) of the first artificial intelligence algorithm 53.

Next, in step S15, the control unit 20A determines whether the first artificial intelligence algorithm 53 has been trained with a predetermined number of labeled positive integrated training data 78P and labeled negative integrated training data 78N. When training is performed with the specified number of labeled positive integrated training data 78P and labeled negative integrated training data 78N (in the case of "YES"), the training process is completed. The control unit 20A stores the trained first artificial intelligence algorithm 63 in the storage unit 23.

When the first artificial intelligence algorithm 53 is not trained with the specified number of labeled positive integrated training data 78P and the labeled negative integrated training data 78N (in the case of "NO"), the control unit 20A advances from step S15 to step S16, and the processes from step S11 to step S15 are performed on the next positive training images 75P1 to 75Px and the negative training images 75N1 to 75Nx.

### iii. Second Artificial Intelligence Algorithm 94 Training Process

In step S111 of FIG. 18B, the control unit 20A generates positive training data 91A from the positive training image 90A and generates negative training data 91B from the negative training image 90B. The control unit 20A assigns a label value 93P or a label value 93N corresponding to each of the positive training data 91A and the negative training data 91B, and generates the labeled positive training data 92A or the labeled negative training data 92B. The labeled positive training data 92A or the labeled negative training data 92B are recorded in the storage unit 23 as training data 92. The method of generating the labeled positive training data 92A and the labeled negative training data 92B is as described in section 3 above.

Next, the control unit 20A inputs the generated labeled positive training data 92A and labeled negative training data 92B into the second artificial intelligence algorithm 94 in step S112 of FIG. 18B, and trains the second artificial intelligence algorithm 94.

Next, in step S113, the control unit 20A determines whether the second artificial intelligence algorithm 94 has been trained with a predetermined number of labeled positive training data 92A and labeled negative training data 92B. When training is performed with the specified number of labeled positive training data 92A and labeled negative training data 92B (in the case of "YES"), the training process is completed. The control unit 20A stores the trained second artificial intelligence algorithm 97 in the storage unit 23.

When the second artificial intelligence algorithm 94 is not trained with the specified number of labeled positive training data 92A and the labeled negative training data 92B (in the case of "NO"), the control unit 20A advances from step S113 to step S114, and performs the processes from step S111 to step S113 on the next positive training image 90A and negative training image 90B.

### (4) Training Program

The present embodiment includes a computer program for training an artificial intelligence algorithm that causes a computer to execute the processes of steps S11 to S16 or S111 to S114.

An implementation of the present embodiment relates to a program product such as a storage medium that stores the computer program. That is, the computer program can be stored on a hard disk, a semiconductor memory element such as a flash memory, or a storage medium such as an optical disk. The recording format of the program on the storage medium is not limited insofar as the training device 200A can read the program. Recording on the storage medium is preferably non-volatile.

Here, the "program" is a concept including not only a program that can be directly executed by the CPU, but also a source format program, a compressed program, an encrypted program, and the like.

### 4-1-2. Cell Imaging Device

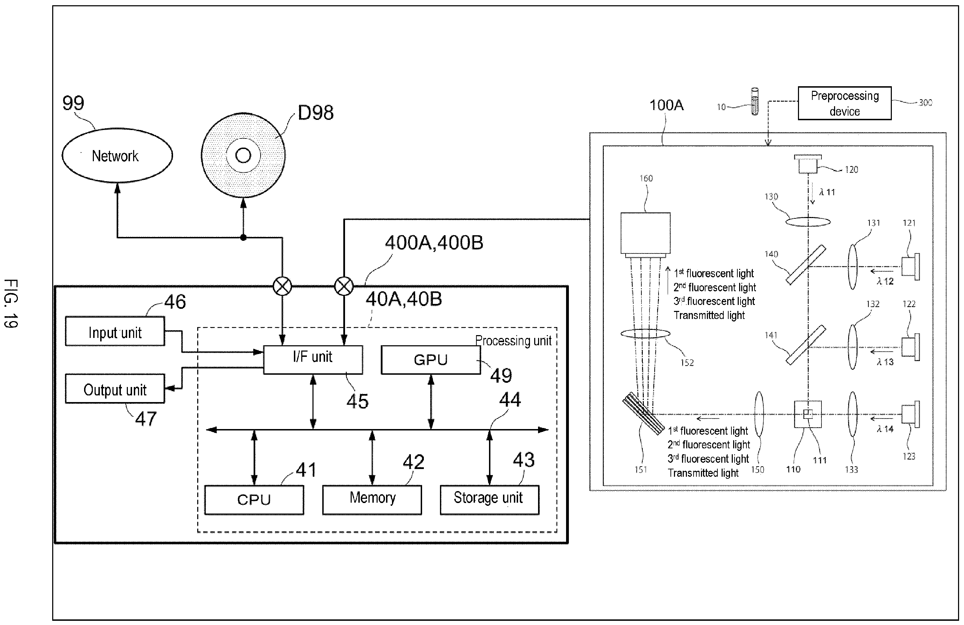

FIG. 19 shows the structure of a cell imaging device 100A that captures the training images 70, 75, 90 and/or the analysis images 80, 85, 95. The cell imaging device 100A shown in FIG. 19 is exemplified by an imaging flow cytometer. The operation of the cell imaging device 100A as an imaging device is controlled by the cell analysis device 400A.

For example, as described above, chromosomal abnormalities or peripheral circulating tumor cells use one or more fluorescent dyes to detect the target site. Preferably, the FISH method uses two or more fluorescent dyes to detect a target site on the first chromosome and a target site on the second chromosome (the "first" and "second" that modify the "chromosome" is a comprehensive concept of numbers that do not mean chromosome numbers). For example, a probe that hybridizes with the PML locus is labeled by a first fluorescent dye in which a nucleic acid having a sequence complementary to the base sequence of the PML locus is irradiated with light of wavelength λ11 to generate first fluorescence of wavelength λ21. With this probe, the PML locus is labeled with the first fluorescent dye. In the probe that hybridizes with the RARA locus, a nucleic acid having a sequence complementary to the base sequence of the RARA locus is labeled with a second fluorescent dye that produces a second fluorescence of a wavelength λ22 when irradiated with light of a wavelength λ12. Using this probe, the RARA locus is labeled with a second fluorescent dye. The nucleus is stained with a dye for nuclear staining that produces a third fluorescence of wavelength λ23 when irradiated with light of wavelength λ13. The wavelength λ11, the wavelength λ12, and the wavelength λ13 are so-called excitation lights. The wavelength λ114 is light emitted from a halogen lamp or the like for bright field observation.

The cell imaging device 100A includes a flow cell 110, a light source 120 to 123, a condenser lens 130 to 133, a dichroic mirror 140 to 141, a condenser lens 150, an optical unit 151, a condenser lens 152, and an imaging unit 160. The sample 10 is flowed through the flow path 111 of the flow cell 110.

The light sources 120 to 123 irradiate light on the sample 10 flowing from the bottom to the top of the flow cell 110. The light sources 120 to 123 are composed of, for example, a semiconductor laser light source. Lights having wavelengths λ11 to λ14 are emitted from the light sources 120 to 123, respectively.

The condenser lenses 130 to 133 collect light having wavelengths λ11 to λ14 emitted from light sources 120 to 123, respectively. The dichroic mirror 140 transmits light having a wavelength of λ11 and refracts light having a wavelength of λ12. The dichroic mirror 141 transmits light having wavelengths λ11 and λ12 and refracts light having wavelength λ13. In this way, light having wavelengths λ11 to λ14 is applied to the sample 10 flowing through the flow path 111 of the flow cell 110. The number of semiconductor laser light sources included in the cell imaging device 100A is not limited insofar as it is 1 or more. The number of semiconductor laser light sources can be selected from, for example, 1, 2, 3, 4, 5 or 6.

When the sample 10 flowing through the flow cell 110 is irradiated with light having wavelengths λ11 to λ13, fluorescence is generated from the fluorescent dye labeled on the cells flowing through the flow path 111. Specifically, when the light of the wavelength λ11 is irradiated on the first fluorescent dye that labels the PML locus, a first fluorescence of the wavelength λ21 is generated from the first fluorescent dye. When light of wavelength λ12 is irradiated on the second fluorescent dye that labels the RARA locus, the second fluorescent dye produces a second fluorescence of wavelength λ22. When light of wavelength λ13 is irradiated on the dye for nuclear dyeing that stains the nucleus, the dye for nuclear dyeing produces a third fluorescence of wavelength λ23. When the sample 10 flowing through the flow cell 110 is irradiated with light having a wavelength of λ14, this light passes through the cells. The transmitted light of wavelength λ14 transmitted through the cells is used to generate a bright-field image. For example, in the embodiment, the first fluorescence is the wavelength region of green light, the second fluorescence is the wavelength region of red light, and the third fluorescence is the wavelength region of blue light.

The condenser lens 150 collects the first fluorescence to the third fluorescence generated from the sample 10 flowing through the flow path 111 of the flow cell 110 and the transmitted light transmitted through the sample 10 flowing through the flow path 111 of the flow cell 110. The optical unit 151 has a configuration in which four dichroic mirrors are combined. The four dichroic mirrors of the optical unit 151 reflect the first fluorescence to the third fluorescence and the transmitted light at slightly different angles, and separate them on the light receiving surface of the imaging unit 160. The condenser lens 152 collects the first fluorescence to the third fluorescence and the transmitted light.

The imaging unit 160 is configured by a TDI (Time Delivery Integration) camera. The imaging unit 160 captures the first fluorescence to the third fluorescence and the transmitted light to obtain a fluorescence image corresponding to the first fluorescence to the third fluorescence and a bright field image corresponding to the transmitted light, which are output as imaging signals to the cell analysis device 400A. The image to be captured may be a color image or a grayscale image.

The cell imaging device 100A also may be provided with a pretreatment device 300 as necessary. The pretreatment device 300 samples a part of the sample and performs FISH, immunostaining, intracellular organelle staining, or the like on the cells contained in the sample to prepare the sample 10.

### 4-1-3. Cell Analysis Device

### (1) Hardware Structure

The hardware structure of the cell analyzer 400A will be described with reference to FIG. 19. The cell analysis device 400A is communicably connected to the cell imaging device 100A. The cell analysis device 400A includes a control unit 40A, an input unit 46, and an output unit 47. he cell analysis device 400A can be connected to the network 99.

The structure of the control unit 40A is the same as the structure of the control unit 20A of the training device 200A. Here, the CPU 21, the memory 22, the storage unit 23, the bus 24, the I/F unit 25, and the GPU 29 in the control unit 20A of the training device 200A are replaced with the CPU 41, the memory 42, the storage unit 43, the bus 44, and the I/F unit 45, and GPU49, respectively. However, the storage unit 43 stores the trained artificial intelligence algorithms 60, 63, and 94 generated by the training device 200A and acquired by the CPU 41 from the I/F unit 45 via the network 99 or the media drive D98.

The analysis images 80, 85, and 95 can be acquired by the cell imaging device 100A and stored in the storage unit 43 or the memory 42 of the control unit 40A of the cell analysis device 400A.

### (2) Function Structure of Cell Analysis Device

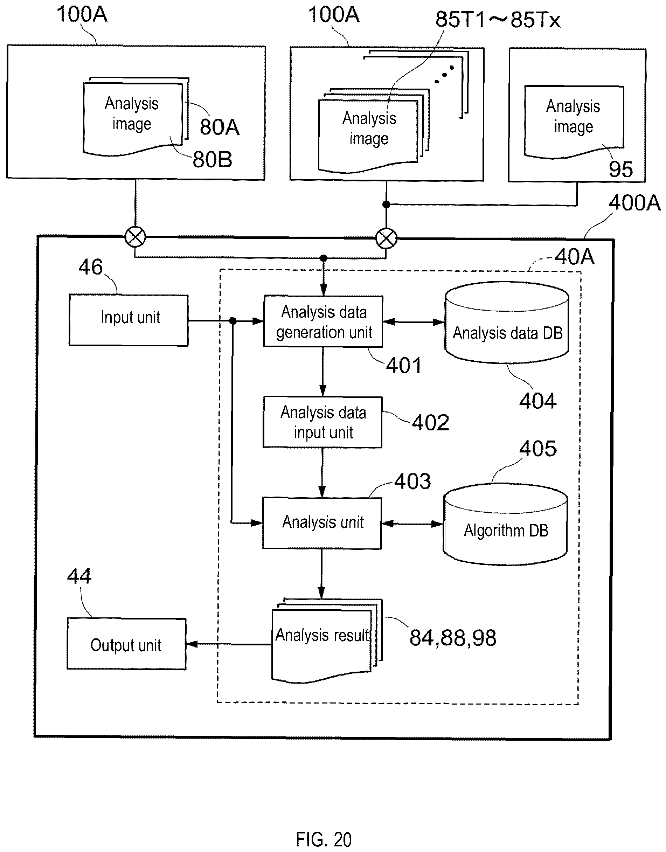

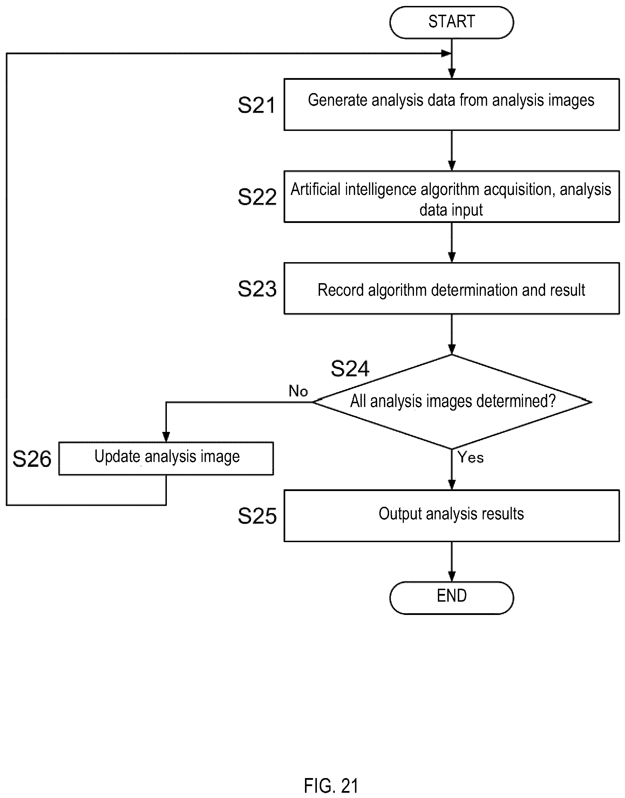

FIG. 20 shows the function structure of the cell analysis device 400A. The cell analysis device 400A includes an analysis data generation unit 401, an analysis data input unit 402, an analysis unit 403, an analysis data database (DB) 404, and an algorithm database (DB) 405. Step S21 shown in FIG. 21 corresponds to the analysis data generation unit 401. Step S22 shown in FIG. 21 corresponds to the analysis data input unit 402. Step S23 shown in FIG. 21 corresponds to the analysis unit 403. The analysis data database 404 stores analysis data 82, 88, 96.

The trained first artificial intelligence algorithm 60 can be recorded in the algorithm database 405 in association with the exam items and analysis items for testing for chromosomal abnormalities. The trained first artificial intelligence algorithm 63 can be recorded in the algorithm database 405 in association with the exam and analysis items for testing peripheral circulating tumor cells. The trained second artificial intelligence algorithm 97 can be recorded in the algorithm database 405 in association with the feature quantity item to be input.

### (3) Cell Analysis Process

The control unit 40A of the cell analysis device 400A performs the cell analysis process shown in FIG. 21. This embodiment facilitates high-precision and high-speed analysis.

The CPU 41 of the control unit 40A starts the cell analysis process according to a request from the user to start the process or when the cell imaging device 100A starts the analysis.

### i. Cell Analysis Process by the First Artificial Intelligence Algorithm 60

The control unit 40A generates integrated analysis data 82 from the analysis images 80A and 80B in step S21 shown in FIG. 21. The method of generating the integrated analysis data 82 is as described in section 2-1 above. The control unit 40A stores the generated integrated analysis data 82 in the storage unit 43 or the memory 42.

In step S22 shown in FIG. 21, the control unit 40A calls the trained first artificial intelligence algorithm 60 stored in the storage unit 43 into the memory 42, and inputs the integrated analysis data 82 generated in step S21 to the first artificial intelligence algorithm 60.

In step S23 shown in FIG. 21, the control unit 40A uses the first artificial intelligence algorithm 60 to determine the properties of the analysis target cells in the analysis images 80A and 80B, and stores the label value 84 of the determination result in the storage unit 43 or in the memory 42. The determination method is as described in section 2-1 above.

The control unit 40A determines whether all the analysis images 80A and 80B have been determined in step S24 shown in FIG. 21, and when all the analysis images 80A and 80B have been determined (in the case of "YES"), proceeds to step S25, and the determination result corresponding to the label value 84 of the determination result is stored in the storage unit 43, and the determination result is output to the output unit. When all the analysis images 80A and 80B are not determined in step S24 (in the case of "NO"), the control unit 40A updates the analysis images 80A and 80B in step S26, and step S21 to step S24 are repeated until the determinations are made for all the analysis images 80A and 80B. Although the determination result may be the label value itself,the determination result also may be a label such as "yes", "no" or "abnormal", "normal" corresponding to each label value.

### ii. Cell Analysis Process by the First Artificial Intelligence Algorithm 63

The control unit 40A generates integrated analysis data 87 from the analysis images 85T1 to 85Tx in step S21 shown in FIG. 21. The method of generating the integrated analysis data 87 is as described in section 2-2 above. The control unit 40A stores the generated integrated analysis data 87 in the storage unit 43 or the memory 42.

In step S22 shown in FIG. 21, the control unit 40A calls the trained first artificial intelligence algorithm 63 stored in the storage unit 43 into the memory 42, and inputs the integrated analysis data 87 generated in step S21 to the first artificial intelligence algorithm 63.

In step S23 shown in FIG. 21, the control unit 40A uses the first artificial intelligence algorithm 63 to determine the properties of the analysis target cells in the analysis images 85T1 to 85Tx, and stores the label value 88 of the determination result in the storage unit 43 or in the memory 42. The determination method is as described in section 2-2 above.

The control unit 40A determines whether all the analysis images 85T1 to 85Tx have been determined in step S24 shown in FIG. 21, and when all the analysis images 85T1 to 85Tx have been determined (in the case of "YES"), proceeds to step S25, and the determination result corresponding to the label value 88 of the determination result is stored in the storage unit 43, and the determination result is output to the output unit. When all the analysis images 85T1 to 85Tx are not determined in step S24 (in the case of "NO"), the control unit 40A updates the analysis images 85T1 to 85Tx in step S26, and step S21 to step S24 are repeated until the determinations are made for all the analysis images 85T1 to 85Tx. Although the determination result may be the label value itself,the determination result also may be a label such as "yes", "no" or "abnormal", "normal" corresponding to each label value.

### iii. Cell Analysis Process by the Second Artificial Intelligence Algorithm 97

The control unit 40A generates integrated analysis data 96 from the analysis image 95 in step S21 shown in FIG. 21. The method of generating the integrated analysis data 96 is as described in section 3 above. The control unit 40A stores the generated integrated analysis data 96 in the storage unit 43 or the memory 42.

In step S22 shown in FIG. 21, the control unit 40A calls the trained second artificial intelligence algorithm 97 stored in the storage unit 43 into the memory 42, and inputs the analysis data 96 generated in step S21 into the second artificial intelligence algorithm 97.

In step S23 shown in FIG. 21, the control unit 40A uses the second artificial intelligence algorithm 97 to determine the properties of the analysis target cells in the analysis image 95, and stores the determination result in the storage unit 43 or in the memory 42. The determination method is as described in section 3 above.

The control unit 40A determines whether all the analysis images 95 have been determined in step S24 shown in FIG. 21, and when all the analysis images 95 have been determined (in the case of "YES"), proceeds to step S25, and the label value 98 of the determination result is stored in the storage unit 43, and the determination result is output to the output unit. When all the analysis images 98 are not determined in step S24 (in the case of "NO"), the control unit 40A updates the analysis images 95 in step S26, and step S21 to step S24 are repeated until the determinations are made for all the analysis images 95. Although the determination result may be the label value itself,the determination result also may be a label such as "yes", "no" or "abnormal", "normal" corresponding to each label value.

### (4) Cell Analysis Program

The present embodiment includes a computer program for performing cell analysis that causes a computer to perform the processes of steps S21 to S26.

An implementation of the present embodiment relates to a program product such as a storage medium that stores the computer program. That is, the computer program is stored in a semiconductor memory element such as a hard disk or a flash memory, or a storage medium such as an optical disk. The recording format of the program on the storage medium is not limited insofar as the training device 200A can read the program. Recording on the storage medium is preferably non-volatile.

Here, the "program" is a concept including not only a program that can be directly executed by the CPU, but also a source format program, a compressed program, an encrypted program, and the like.

### 4-2. Second Embodiment of a Cell Analysis System

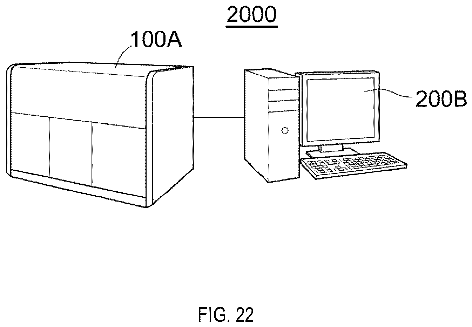

As shown in FIG. 22, the cell analysis system 2000 according to the second embodiment includes a cell imaging device 100A and a training/analysis device 200B that trains an artificial intelligence algorithm and analyzes cells. In the cell analysis system 1000 according to the first embodiment, training of an artificial intelligence algorithm and analysis of cells are performed by different computers. In the second embodiment, one computer trains an artificial intelligence algorithm and analyzes cells. The training/analysis device 200B acquires training images 70PA, 70PB, 70NA, 70NB, and 75P1 to 75Px, 75N1 to 75Nx, 90A, 90B and analysis images 80A, 80B, 85T1 to 85Tx, and 95 from the cell imaging device 100A.

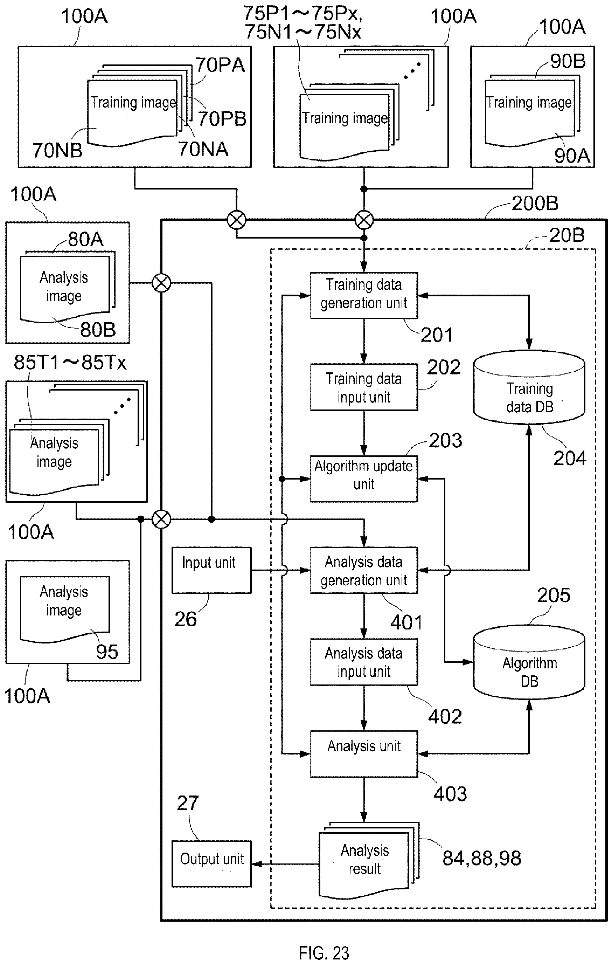

The hardware structure of the training/analysis device 200B is the same as that of the cell analysis device 400A shown in FIG. 19. The functions of the training/analysis device 200B will be described with reference to FIG. 23. The training/analysis device 200B includes a training data generation unit 201, a training data input unit 202, an algorithm update unit 203, an analysis data generation unit 401, an analysis data input unit 402, an analysis unit 403, a training data database (DB) 204, and an algorithm database (DB) 205. Each function structure is basically the same as the structure shown in FIGS. 17 and 20, but in the present embodiment, the training data 73, 78, 92 and the analysis data 82, 88, 96 are stored in the training data database (DB) 204. Step S11 shown in FIG. 18A and step S111 shown in FIG. 18B correspond to the training data generation unit 201. Step S12 shown in FIG. 18A and step S112 shown in FIG. 18B correspond to the training data input unit 202. Step S14 shown in FIG. 18A corresponds to the algorithm update unit 203. Step S21 shown in FIG. 21 corresponds to the analysis data generation unit 401. Step S22 shown in FIG. 21 corresponds to the analysis data input unit 402. Step S23 shown in FIG. 21 corresponds to the analysis unit 403.

The training process and the cell analysis process are described in section 4-1 above which is incorporated herein by reference. However, various data generated in the process are stored in the storage unit 23 or the memory 22 of the training/analysis device 200B.

### 4-3. Third Embodiment of a Cell Analysis System

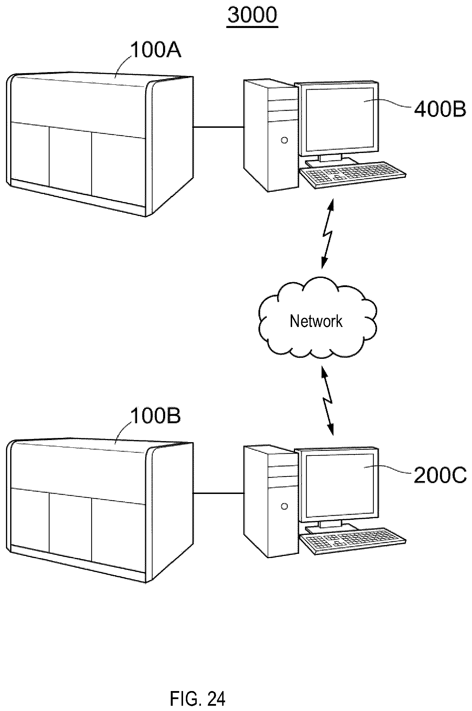

As shown in FIG. 24, the cell analysis system 3000 according to the third embodiment includes a cell imaging device 100B, a training device 200C that trains an artificial intelligence algorithm and analyzes cells, a cell imaging device 100A, and an image acquisition device 400B that acquires images from the cell imaging device 100A. In the cell analysis system 1000 according to the first embodiment, training of an artificial intelligence algorithm and analysis of cells are performed by different computers. In the third embodiment, the training device 200C is an example of a device for training an artificial intelligence algorithm and analyzing cells. The training device 200C acquires training images 70PA, 70PB, 70NA, 70NB, 75P1 to 75Px, 75N1 to 75Nx, 90A and 90B from the cell imaging device 100B, and analyzes images 80A, 80B, 85T1 to 85Tx, and 95 acquired from the image acquisition device 400B.

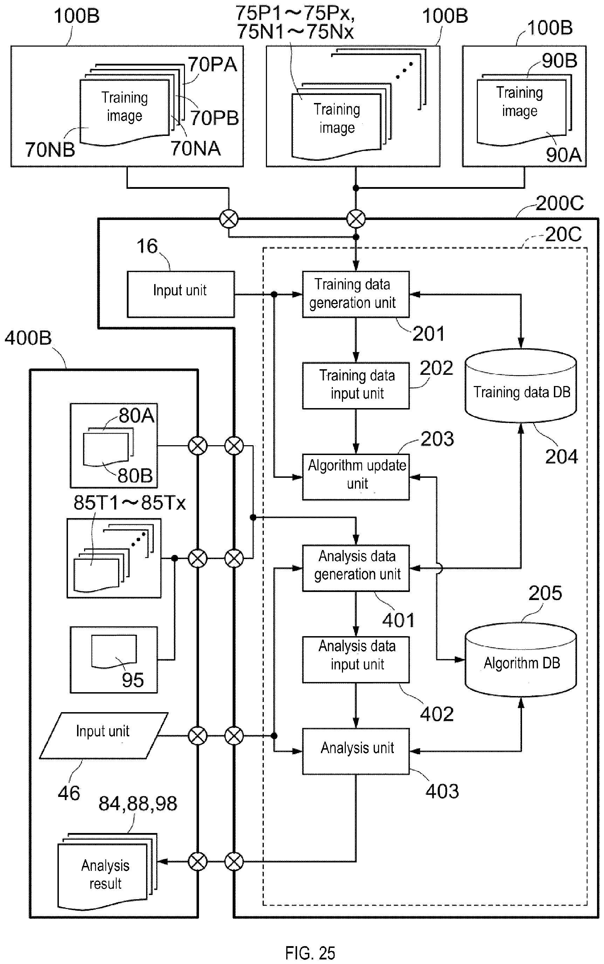

The hardware structure of the training device 200C and the image acquisition device 400B is the same as that of the cell analysis device 400A shown in FIG. 19. The functions of the training device 200C will be described with reference to FIG. 25. The function structure of the training device 200C is the same as that of the training/analysis device 200B shown in FIG. 23, and the training data generation unit 201; the training data input unit 202, the algorithm update unit 203, the analysis data generation unit 401, the analysis data input unit 402, an analysis unit 403, a training data database (DB) 204, and an algorithm database (DB) 205 are included. Each function structure is basically the same as the structure shown in FIGS. 17 and 20, but in the present embodiment, the training data 73, 78, 92 and the analysis data 82, 88, 96 are stored in the training data database (DB) 204. Step S11 shown in FIG. 18A and step S111 shown in FIG. 18B correspond to the training data generation unit 201. Step S12 shown in FIG. 18A and step S112 shown in FIG. 18B correspond to the training data input unit 202. Step S14 shown in FIG. 18A corresponds to the algorithm update unit 203. Step S21 shown in FIG. 21 corresponds to the analysis data generation unit 401. Step S22 shown in FIG. 21 corresponds to the analysis data input unit 402. Step S23 shown in FIG. 21 corresponds to the analysis unit 403.

The training process and the cell analysis process are described in section 4-1 above which is incorporated herein by reference. However, various data generated in the process are stored in the storage unit 23 or the memory 22 of the training 200C.

### 5. Other

The present invention shall not be construed as being limited to the embodiments described above.

For example, although a plurality of different images of the same cell in the same field are used in the generation of training data and analysis data in the above-described embodiment, one training datum may be generated from one cell image, and one analysis datum may be generated from one cell image..

Although analysis data are generated from a plurality of images obtained by capturing images of different light wavelength regions of the same field of view of one cell in the above-described embodiment, one cell may be imaged multiple times to obtain a plurality of images by another method. For example, analysis data may be generated from a plurality of images obtained by imaging one cell from different angles, or analysis data may be generated from a plurality of images obtained by imaging with staggered timing the th cell of one label value 84.

In the above-described embodiment, the normality or abnormality of the cell is determined, but the cell type and the cell morphology also may be determined.

### Examples

Examples will be used to describe embodiments in more detail. However, the present invention shall not be construed as being limited to the examples.

### I. Detection of Peripheral Circulating Tumor Cells

### 1. Data Acquisition Method

Breast cancer cell line MCF7 and peripheral blood mononuclear cells PBMC (Peripheral Blood Mononuclear Cells) were used as model samples of CTC and blood cells. The cells were stained with Hoechst reagent and then subjected to an imaging flow cytometer (ImageStream Mark II, Luminex) to obtain bright-field images and nuclear-stained images. The conditions of the imaging flow cytometer were magnification: 40 times, flow velocity: Medium, and EDF filter.

### 2. Analysis

### 2-1. Analysis Example by Deep Learning Algorithm

### (1) Artificial Intelligence Algorithm

Python 3.7.3, TensorFlow 2.0 alpha Keras was used as the language and library. A convolutional neural network (CNN) was used as an artificial intelligence algorithm.

### (2) Data Set

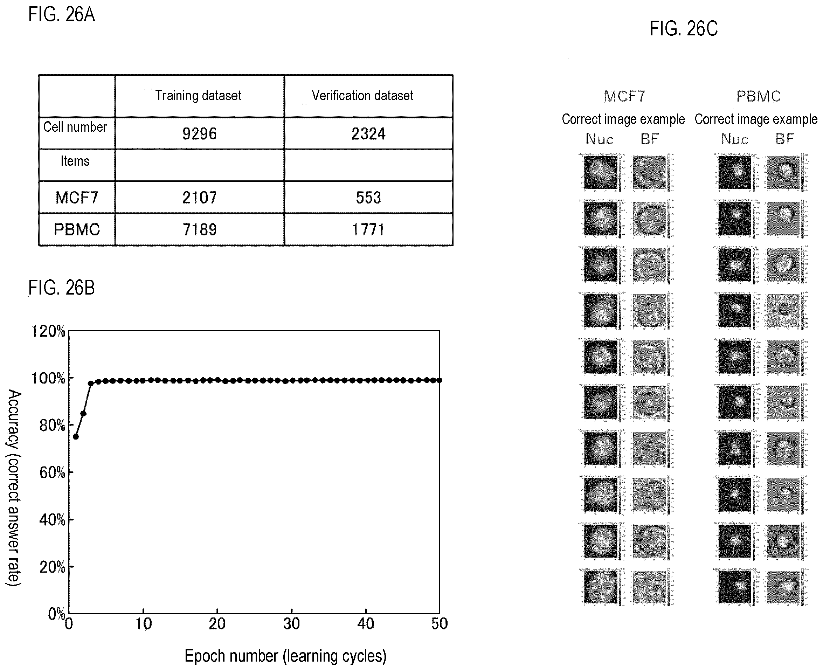

Details of the data set are shown in FIG. 26A. Note that since two images, that is, a bright-field image and a nuclear-stained image, were used for each cell, twice the number of images was used for the analysis. The image size was trimmed to 32 x 32 pixels. At that time, the cells were extracted so that the center of gravity of the cell nucleus became the center of the image. Training data and analysis data were generated according to the method for analyzing peripheral circulating tumor cells using the first artificial intelligence algorithm 63 described in the text of the specification.

### (3) Results

Two classes, MCF7 and PBMC, were discriminated. First, a discriminant model was created using the training data set. FIG. 26B shows the relationship between the number of epochs (number of learnings) and accuracy (correct answer rate). With less than 10 epochs, the correct answer rate reached almost 100%. The correct answer rate was examined using the model with the 50th epoch as the discrimination model. When the model with the 50th epoch number was used, the correct answer rate of the training data set was 99.19%, and the correct answer rate of the verification data set was 99.10%, which were very good results.

FIG. 26C shows an example of the correct answer. Nuc indicates nuclear staining and BF indicates phase difference images.

### 2-2. Analysis Example by Machine Learning Other Than Deep Learning

### (1) Artificial Intelligence Algorithm

Python 3.7.3, scikit-learn was used as the language and library. Random forest and gradient boosting were used as artificial intelligence algorithms.

### (2) Data Set

For each of the bright-field image and the nuclear-stained image of the data set shown in FIG. 26A, 70 types of feature quantities (bright-field image) shown in FIG. 13 were used using the analysis software (IDEAS) attached to the imaging flow cytometer, and a data set was generated that defined the feature amount (feature amount: 140 types by combining the images and nuclear staining images).

### (3) Result

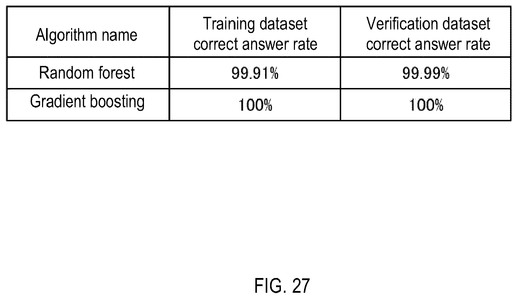

Two classes, MCF7 and PBMC, were discriminated. A discriminant model was created by random forest and gradient boosting using the above dataset. The correct answer rate when each model is used is shown in FIG. 27. The correct answer rate was 99.9% or higher, and the correct answer rate was very good for both random forest and gradient boosting.

### II. Detection of Chromosomally Abnormal Cells

### 1. Examination 1

### (1). Artificial Intelligence Algorithm

Python 3.7.3, TensorFlow 2.0 alpha was used as the language and library. A convolutional neural network (CNN) was used as an artificial intelligence algorithm. The training was conducted up to 50 times.

### (2). Data Acquisition Method

PML-RARA chimeric gene-positive cells were subjected to an imaging flow cytometer MI-1000 to acquire images of channel 2 (green) and channel 4 (red). The image was taken with a magnification of 60 times and an EDF filter.

Negative integrated training data were generated according to the analysis method of chromosomally abnormal cells using the first artificial intelligence algorithm 60 described in the text of the specification from the image set of channel 2 (green) and channel 4 (red) of negative control cells determined to be free of chromosomal aberrations (G2R2F0) by known methods. The negative integrated training data was labeled with a "nega label" indicating that the chromosomal abnormality was negative, and labeled negative integrated training data were generated. Similarly, positive integrated training data were generated from channel 2 and channel 4 image sets of positive control cells determined to have chromosomal abnormalities (G3R3F2) by known methods. The positive integrated training data were labeled with a "posi label" indicating that the chromosomal abnormality was positive, and labeled positive integrated training data were generated. Here, for example, "G" and "R" of G2R2F0 mean a channel number, and "F" means a fusion signal. The numbers indicate the number of signals in one cell.

3741 sets of labeled negative integrated training data and 2052 sets of labeled positive integrated training data were prepared, and 3475 sets, which is 60% of these, were used as training data. In addition, 1737 sets, which is 30%, were used as test data, and 581 sets, which was 10%, were used as validation data.

### (3) Result

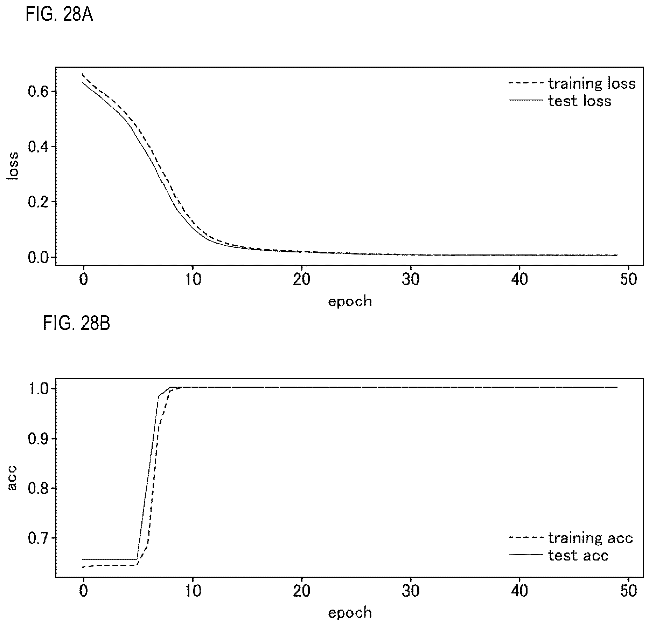

The correct answer rate was 100%. In addition, FIG. 28A shows the change in the loss rate as the number of epochs increases. A decrease in the loss rate was observed as the number of epochs increased. In addition, FIG. 28B shows the change in the correct answer rate as the number of epochs increases. As the number of epochs increased, the percentage of correct answers improved.

### 2. Examination 2

### (1) Artificial Intelligence Algorithm

Python 3.7.3, TensorFlow 2.0 alpha was used as the language and library. A convolutional neural network (CNN) was used as an artificial intelligence algorithm. The training was conducted up to 100 times.

### (2) Data

Three PML-RARA chimeric gene-positive samples (sample IDs: 03-532, 04-785, 11-563) were used for the imaging flow cytometer MI-1000 to acquire images of channel 2 (green) and channel 4 (red). The image was taken with a magnification of 60 times and an EDF filter. Negative integrated training data were generated from channel 2 and channel 4 image sets of cells determined to be free of chromosomal abnormalities (G2R2F0) by known methods, according to the method described in the text of the specification. The negative integrated training data was labeled with a "nega label" indicating that the chromosomal abnormality was negative, and labeled negative integrated training data were generated. Similarly, positive integrated training data were generated from channel 2 and channel 4 image sets of cells determined to have chromosomal abnormalities (G3R3F2) by known methods. The positive integrated training data were labeled with a "posi label" indicating that the chromosomal abnormality was positive, and labeled positive integrated training data were generated. Here, for example, "G" and "R" of G2R2F0 mean a channel number, and "F" means a fusion signal. The numbers indicate the number of signals in one cell.

Using the images of these samples, we attempted to detect the PML-RARA chimeric gene by a deep learning algorithm. The number of training data was 20537 and the number of analysis data was 5867.

### (3) Result

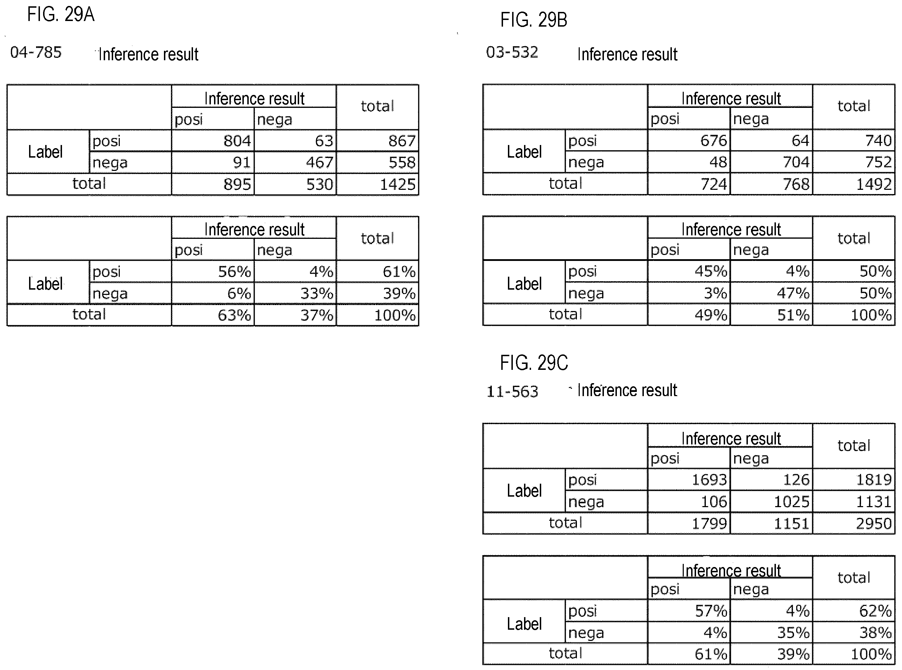

The determination results for each sample are shown in FIGS. 29A to 29C. FIG. 29A shows the inference result of sample number 04-785, FIG. 29B shows the inference result of sample number 03-352, and FIG. 29C shows the inference result of sample number 11-563. As for the inference result, 92% of all the analysis data were correctly determined to be positive or negative. In addition, the correct answer rate for each sample was about 90%, and no bias was observed. Furthermore, the rate of false positives or false negatives was 3 to 6%, showing no bias. From this result, it was considered that a model without bias for each sample and positive or negative bias could be generated.

## Claims

1. A cell analysis method for analyzing cells using an artificial intelligence algorithm, the method comprising:
flowing a sample containing cells into a flow path;
generating analysis target images by capturing images of the cells passing through the flow path;
generating analysis data from the generated analysis target images;
inputting the generated analysis data into an artificial intelligence algorithm; and
generating data indicating properties of cells included in the analysis target images by the artificial intelligence algorithm.

2. The cell analysis method according to claim 1, wherein
the data indicating the properties of the cells are data indicating whether the cells have a chromosomal abnormality or data indicating whether the cells are peripheral circulating tumor cells.

3. The cell analysis method according to claim 1, wherein
the cells have a target site labeled.

4. The cell analysis method according to claim 3, wherein
the target site is present in at least one selected from a nucleus, a cytoplasm, and a cell surface.

5. The cell analysis method according to claim 3, wherein
the target site is labeled by an in situ hybridization method, an immunostaining method, or an intracellular organelle staining method.

6. The cell analysis method according to any one of claims 3 to 5, wherein
the label is a label with a fluorescent dye label.

7. The cell analysis method according to any one of claims 1 to 6, wherein
the analysis target images include a plurality of images obtained by capturing one cell a plurality of times, and the analysis data is generated from each image, respectively.

8. The cell analysis method according to claim 7, wherein
the plurality of images are images in which different wavelength regions of light having the same field of view are captured.

9. The cell analysis method according to claim 8, wherein
the plurality of images include a first fluorescence image which captured a first fluorescence label present in a nucleus, and a second fluorescence image which captured a second fluorescence label present in the nucleus.

10. The cell analysis method according to claim 8, wherein
the plurality of images include a bright field image of the cell and a fluorescence image of a fluorescent label of the cell.

11. The cell analysis method according to any one of claims 1 to 10, wherein
generating the analysis target image includes a trimming process of extracting a cell region from an image obtained by capturing an image of a cell.

12. The cell analysis method according to any one of claims 1 to 11, wherein
the artificial intelligence algorithm is a deep learning algorithm having a neural network structure.

13. The cell analysis method according to claim 12, wherein
the analysis data includes data indicating brightness of each pixel of the analysis target image.

14. The cell analysis method according to any one of claims 1 to 12, wherein
the analysis data includes data indicating a feature amount in the analysis target image.

15. The cell analysis method according to claim 14, wherein
the feature amount includes an area of the cell in the analysis target image.

16. A cell analysis device for analyzing cells using an artificial intelligence algorithm, the cell analysis device comprising:
a control unit configured to input analysis data generated from each of analysis target images obtained by imaging cells passing through a flow path into the artificial intelligence algorithm; and generate data indicating properties of cells included in the analysis target image by the artificial intelligence algorithm.

17. A cell analysis system comprising:
a flow cell through which a sample containing cells flows;
a light source for irradiating light on the sample flowing through the flow cell;
an imaging unit for imaging cells in the sample irradiated with the light; and
a control unit;
wherein the control unit is configured to:
generate an analysis target images of the cells flowing through the flow path imaged by the imaging unit:
generate analysis data from the analysis target images;
input the generated analysis data into an artificial intelligence algorithm; and
generate data indicating properties of cells included in the analysis target images by the artificial intelligence algorithm.

18. A computer implemented program for analyzing cells, for executing, on a computer, processing comprising:
inputting analysis data generated from analysis target images obtained by imaging cells passing through a flow path into the artificial intelligence algorithm; and
generating data indicating properties of cells included in the analysis target image by the artificial intelligence algorithm.

19. A trained artificial intelligence algorithm generation method for analyzing cells, comprising:
inputting training data generated from a training image which has been generated by imaging a cell passing through a flow path when flowing a sample containing cells in the flow path, and a label showing a property of the cell contained in the training image into an artificial intelligence algorithm to train the artificial intelligence algorithm.

20. The generation method according to claim 19, wherein
the training image includes a plurality of images of one cell, the plurality of the images include images obtained by capturing different wavelength regions of light in the same field of view, and the training data are generated from each image.

21. The generation method according to claim 20, wherein
the plurality of images comprise a first fluorescent image of a first fluorescent label present in a nucleus, and a second fluorescent image of a second fluorescent label present in the nucleus.

22. The generation method according to claim 20, wherein
the plurality of images comprise a bright field image of the cell and a fluorescent image of a fluorescent label of the cell.
